**Europäisches Patentamt**

(19) **European Patent Office**

**Office européen des brevets**

(11) Publication number : **0 526 564 B1**

(12) # EUROPEAN PATENT SPECIFICATION

(45) Date of publication of patent specification :
**22.06.94 Bulletin 94/25**

(51) Int. Cl.⁵ : **A23L 1/24,** A23L 1/308, A21D 2/18

(21) Application number : **91909027.4**

(22) Date of filing : **24.04.91**

(86) International application number :
**PCT/DK91/00109**

(87) International publication number :
**WO 91/15967 31.10.91 Gazette 91/25**

(54) **A LOW-CALORIE STABLY EMULSIFIED FOOD PRODUCT, A PROCESS FOR MAKING SAME AND A TEXTURE-IMPROVING COMPOSITION FOR USE IN MAKING THE PRODUCT.**

(30) Priority : **26.04.90 DK 1036/90**
**02.08.90 DK 1852/90**

(43) Date of publication of application :
**10.02.93 Bulletin 93/06**

(45) Publication of the grant of the patent :
**22.06.94 Bulletin 94/25**

(84) Designated Contracting States :
**AT BE CH DE DK ES FR GB GR IT LI LU NL SE**

(56) References cited :
**EP-A- 0 401 939**
**WO-A-90/05460**
**DD-A- 227 607**
**GB-A- 1 418 544**
**US-A- 4 798 733**

(73) Proprietor : **DANISH CROWN INCORPORATED A/S**
**Marsvej 43**
**DK-8900 Randers (DK)**

(72) Inventor : **CHRISTENSEN, Bent**
**Ringparken 6**
**DK-9800 Hjorring (DK)**
Inventor : **MOGENSEN, Frits**
**Mejsevej 59**
**DK-9800 Hjorring (DK)**
Inventor : **HOLMAGER, Leif**
**Malmmosevej 82**
**DK-2840 Holte (DK)**

(74) Representative : **Andersen, Henrik Rastrup et al**
**c/o Plougmann & Vingtoft A/S,**
**Sankt Annae Plads 11,**
**P.O. Box 3007**
**DK-1021 Copenhagen K (DK)**

## Description

FIELD OF THE INVENTION

The present invention relates to a stably emulsified food product, a process for making such a food product and a texture-improving composition which is useful in making an emulsified food product.

TECHNICAL BACKGROUND OF THE INVENTION

Food products which are oil-in-water emulsions include mayonnaises, creamy salad dressings, sauces such as bearnaise sauce, hollandaise sauce and certain types of creamy spreads including chocolate spread. Typically, food products of this type are emulsions comprising a dispersed phase of edible fats such as vegetable oils, an emulsifying agent such as egg yolk or egg yolk lecithin and a continuous aqueous phase optionally comprising acidifying agents, sweetening agents, salt, thickening agents or flavouring agents.

The amount of the dispersed fat phase in commercial oil-in-water emulsion food products varies i.a. according to the product type. Thus, commercially available mayonnaises may typically have a fat content in the range of 30-80 wt% of the product. Mayonnaises having a relative low content of fat such as in the range of 30-50 wt% are frequently referred to as "light mayonnaises". The majority of available salad dressings have fat contents in the range of 20-50 wt% and sauces and spreadable products have fat contents typically being in the range of 30-50 wt%. Commonly, such salad dressings and spreadable products having fat contents in the range of 20-30 wt% are also referred to as "light" products.

However, the high fat content of these presently available emulsified products make them less acceptable from a nutritional point of view. A clear need therefore exists to develop such products in which the fat content is reduced significantly and several attempts in this direction have been disclosed.

With the known techniques, however, a relatively high amount of the fat phase is critical for the desired characteristics which are associated with conventional mayonnaises, salad dressings and sauces. The acceptability of such oil-in-water emulsion food products may be assessed according to criteria which are related to the high amount of dispersed fat: viscosity, texture, mouth feel, colour and flavour, the acceptability level of which may vary according to the particular product type. In general, the products should have a viscosity when determined by a BROOKFIELD™ viscometer as defined in the below examples, in the range of 30-400 kg/m·s (30.000-400.000 cps) and have a creamy, smooth, short and rich/full texture. In the present context, the term "mouth feel" is used to describe the overall sense impressions resulting from the mastication of the product in the mouth and includes an impression of viscosity and texture, the degree of flavour being released and also sensing of the product not becoming attached to the oral mucosa.

It is well-known in the art that a certain amount of a water soluble thickening ingredient, which typically is a mixture of modified starches and vegetable gums, is required to obtain the above-mentioned desired product characteristics, the required amount and the composition of such thickening ingredients being related in particular to the content of fat and the desired viscosity. When the fat content is reduced and the water phase is increased, a higher amount of thickening ingredients is required to obtain acceptable product characteristics.

However, at a certain point the amount of thickening agents needed to obtain an acceptable viscosity will result in unacceptable texture, mouth feel and taste characteristics of the resulting fat-reduced emulsion products. Thus, a high content of starch and/or vegetable gums may confer to the product a sticky or spongy texture and an unacceptable mouth feel. It is presently recognized in the art that economically and technologically acceptable means of reducing the fat content of the above-mentioned oil-in-water emulsion products to less than about 20 wt% without adversely affecting or loosing their desired characteristics, are not available.

In EP 0 366 336 are disclosed mayonnaise-type emulsions containing fat in the range of 10-40 wt%, 40-70 wt% water, 3-8 wt% starch, 0.4-0.7 wt% milk protein concentrate, acidifying agents and 0.1-0.5 wt% of a hydrocolloid such as xanthan gum or carboxymethylcellulose, as well as a process for making the emulsions. The process comprises addition of the fat in two steps, two emulsifying steps and a heat treatment of the resulting product which treatment is necessary to gelatinize the starch.

In CA 834095 is disclosed a salad dressing containing 5-12 wt% edible vegetable oil, 3-10 wt% of a gelatinised starch, 0.1-2 wt% propylene glycol alginate and 0.1-2 wt% glycerol. The dressing is made by a process which includes the preparation of a starch-containing paste and cooking of this paste.

SU 805986 discloses edible oil-in-water emulsions with a fat content of 3-20 wt% comprising milk proteins; a stabilizing ingredient selected from saccharose, glucose, starch, glycerol, sorbitol, pectin and sodium alginate; and a calcium salt.

WO-A-90/05460 discloses the use of hemicellulose as a substitute for fat found in conventional food products. Products which may be made include mayonnaise substitutes and salad dressings.

US 4,140,808 discloses a sterilized mayonnaise product having a fat content less than 30 wt% comprising 25-75 wt% of buttermilk which has been subjected to a treatment at an elevated temperature and at low pressure to remove undesirable aromatic components, forming the treated butter-milk into a finely divided suspension of protein particles and cooling the resulting suspension.

The present invention provides edible oil-in-water emulsion products in which the fat content is reduced to 20 wt% or less in such a manner that the advantageous effects on the above-mentioned product characteristics which is associated with a higher fat content is substantially unaffected, and which can be made by conventional and economical industrial processes.

## SUMMARY OF THE INVENTION

In a first aspect, the present invention relates to a stably emulsified food product containing 1-30 wt% of a dispersed fat phase, at least one emulsifying agent and a continuous aqueous phase, the aqueous phase containing 0.1-20 wt% dry matter of a vegetable ingredient comprising native dietary fiber which is less than 50% water soluble, and native starch, in a weight ratio which is in the range of 1:32 to 1:1, the proportion of dietary fiber being at least 5 wt% of the vegetable ingredient dry matter when determined as non-starch polysaccharides (NSP), and the proportion of starch being at least 50 wt% of the vegetable ingredient dry matter, and a thickening agent which is more than 90% water soluble.

It has surprisingly been found that the presence of a vegetable ingredient as defined above is capable of conferring to the low-fat emulsified food products, the technologically and sensory desirable characteristics generally associated with the presence of a fat content in the range of 30-80 wt% in oil-in-water emulsion food products.

In preferred embodiments of the invention the emulsified food product has a fat content which is at the most 20 wt% and preferred amounts of the vegetable ingredient dry matter in the aqueous phase is in the range of 0.5-10 wt%.

In a further aspect, the present invention relates to a texture-improving composition for use in making an emulsified food product, the composition containing a vegetable ingredient comprising native dietary fiber which is less than 50% water soluble, and native starch, in a weight ratio which is in the range of 1:32 to 1:1, the proportion of dietary fiber being at least 5 wt% of the vegetable ingredient dry matter when determined as non-starch polysaccharides (NSP), and the proportion of starch being at least 50 wt% of the vegetable ingredient dry matter, and at least one thickening agent which is more than 90% soluble in water, the weight ratio between thickening agents and the vegetable ingredient being in the range of 1:20 to 20:1.

Preferably, the composition according to the invention has a weight ratio between thickening agents and the vegetable ingredient which is in the range of 1:10 to 10:1 and the composition is preferably in a dry form having a water content of at the most 20 wt%.

In a still further aspect, the invention provides a process for making a stably emulsified food product comprising mixing 1-30 wt% of an edible fat, at least one emulsifying agent and an aqueous phase containing 0.1-20 wt% dry matter of a vegetable ingredient comprising native dietary fiber which is less than 50% water soluble, and native starch, in a weight ratio which is in the range of 1:32 to 1:1, the proportion of dietary fiber being at least 5 wt% of the vegetable ingredient dry matter when determined as non-starch polysaccharides (NSP), and the proportion of starch being at least 50 wt% of the vegetable ingredient dry matter, and at least one thickening agent which is more than 90% water soluble, the weight ratio between thickening agent and the vegetable ingredient being in the range of 1:20 to 20:1, to obtain an oil-in-water emulsion.

## DETAILED DISCLOSURE OF THE INVENTION

As previously defined, the food products according to the invention are stably emulsified oil-in-water emulsions comprising 1-30 wt% of a dispersed fat phase. In the present context, the term "fat" refers to edible lipid substances in a general sense, including natural or synthesized fats and oils consisting essentially of triglycerides such as for example soybean oil, sunflower oil, corn oil, cottonseed oil, olive oil, palm oil, coconut oil or fat, butter fat and fish oil, which may be partially or completely hydrogenated, fractionated, interesterified or modified otherwise, as well as edible lipid materials having properties similar to triglycerides, which materials may be indigestible such as polyol fatty acid polyesters.

Preferred products according to the invention comprises an amount of dispersed fat phase which is at the most 20 wt%. In more preferred embodiments, the products have a fat phase which is at the most 15 wt% such as at the most 10 wt%. In even more preferred embodiments, the products according to the invention contains a fat phase which is at the most 5 wt% and in particularly preferred embodiments, the fat phase is at the most 3 wt%.

In the present context, the term "stably emulsified" refers to a state where the two phases of an emulsion do not separate to a visually detectable level during the normal shelf-life of the product. A reduced emulsion stability may be related to inadequate amounts of emulsifying agent or inadequate mechanical treatment during manufacturing. It may also be due to the syneresis phenomenon occurring when the water binding capability of water binding thickening agents in the emulsion is reduced with time. The frequency with which syneresis is experienced in oil-in-water emulsions varies inversely as the fat content as a result of the need to incorporate increasing amounts of thickening agents when the aqueous phase is increased.

In those emulsified products according to the invention which are of the types usually referred to as mayonnaises, creamy salad dressings and mayonnaise-like sauces such as bearnaise and hollandaise sauces, egg yolk or egg yolk lecithin is normally used as the emulsifying agent, optionally in the form of pasteurized products. The egg yolk emulsifying agent may comprise liquid egg yolks, frozen egg yolks, dried egg yolks, liquid whole eggs, frozen whole eggs, dried whole eggs or combinations of these egg yolk products. The amount hereof which is required depends on the composition of the emulsified food product, in particular on the amount of fat which is to be dispersed. Typically, the amount of egg yolk when used as tne only emulsifying agent will be in the range of 2-6 wt%. In addition to its emulsifying effect, egg yolk confers to the emulsified product a desired yellow/yellowish colour, and it contributes to the desired creamy texture of the emulsified food product.

Other useful emulsifying agents which may be used as the sole emulsifier or in combination with an egg yolk emulsifying agent in the products according to the invention are selected from vegetable lecithin such as soybean lecithin, proteins such as for example milk proteins or edible oil-in-water emulsifying agents which are fatty acid derivatives such as glycerol partial fatty acid esters including as examples glycerol monostearate or glycerol distearate or mixtures of such emulsifiers.

As previously defined, the food products according to the invention contains a continuous aqueous phase containing 0.1-20 wt% dry matter of a vegetable ingredient comprising native dietary fiber which is less than 50% water soluble, and native starch.

In the present context the term "native dietary fiber" refers to a non-starch polysaccharide material of plant origin being less than 50% water soluble and which resists digestion by the human alimentary enzymes and which is essentially in the form in which it is present in the plant and which has not been subjected to any substantial chemical or enzymatic modification. When used herein the term "water soluble" is related to the enzymatic method for simultaneous determination of soluble and insoluble fiber published by the Association of Official Analytical Chemists (AOAC) in J. Assoc. Official Anal. Chem., 1985, 68, No. 4.

Essentially all plant materials contain dietary fiber, particularly in their cell walls. Dietary fiber is a generic term that includes a number of unique chemical structures and characteristic physical properties. The principal components of dietary fiber are the major structural components of plant cell walls: cellulose, non-cellulosic polysaccharides including hemicellulose and pectic substances, and lignin. All dietary fiber components apart from lignin are non-starch polysaccharides (NPS). The term NPS are frequently used as a practical indication of the dietary fiber content of a plant material. It should, however, be noted that the term NPS does not include lignin.

Typically, cell walls of immature plants consist of about 25 wt% cellulose, 60 wt% non-cellulosic polysaccharides and a trace of lignin, whereas the mature cell wall typically contains about 38 wt% cellulose, 43 wt% non-cellulosic polysaccharides and 17 wt% lignin. Among the above-mentioned dietary fibers cellulose, lignin and some hemicelluloses are water-insoluble. Remaining hemicelluloses and some pectic substances are at least partially water soluble. From this explanation it will be understood that the degree of water solubility of a dietary fiber-containing vegetable material depends on the composition of the dietary fiber component hereof. As examples, about 55% of the potato dietary fiber component and about 85% of the dietary fiber component of wheat bran, are water-insoluble.

The amount of the dietary fiber component in plant materials varies according to the botanical species and the maturity of the plant. As examples, potatoes contain about 2 wt% and carrots about 2.1 wt% of NPS on a fresh weight basis, i.e. about 10 wt% in the dry matter. The NPS content of dried materials such as soy flour and dried peas is about 14 wt% and 19 wt%, respectively. Among cereal materials white wheat flour has a NPS content of about 3.3 wt%, whole wheat flour one of about 10.4 wt% and wheat bran has a NPS content of about 41 wt%. In the present context a useful characteristic of dietary fibers as defined above is their hydratability which is i.a. a function of the three-dimensional structure of the fibers. This hydratability is reflected in a high water holding capacity.

It has been found that vegetable ingredients containing a native dietary fiber component which is in the range of 8-12 wt% of the dry matter are useful in the invention. Accordingly, in one embodiment, a product according to the invention comprises in the aqueous phase a vegetable ingredient having a dry matter dietary fiber content which is at least 10 wt%.

However, consumer preferences as to the characteristics of emulsified food products according to the invention may vary in different market places. Since the proportion of dietary fiber in the vegetable ingredient may influence these characteristics, a suitable proportion of dietary fiber in the vegetable ingredient may vary considerably. It is considered that in general a minimum proportion of 5 wt% NSP is required to obtain acceptable emulsified products according to the invention. In certain types of emulsified products according to the invention a vegetable ingredient having a considerably higher dietary fiber content such as at least 15 wt%, may be preferable.

As used herein, starch is defined as a naturally occurring, high-polymeric carbohydrate occurring in plant materials in the form of white granules, usually made up of both a linear polymer (amylose) and a branched polymer (amylopectin). The many botanical varieties of starch exhibit differences with respect to their physical characteristics and chemical composition. Starch granules from grains such as rice and maize vary between 3 and 20 μm with respect to the average size of their largest diameter, and those from roots and tubers such as tapioca, arrowroot or potatoes between 10 and 100 μm. Thus as an example, rice starch has an average granule size of about 4 μm, maize starch one of about 14 μm and potato starch one of about 100 μm.

Starch granules swell progressively in water as the temperature is raised into the range of 60-70°C. This swelling phenomenon is an indication of the binding of water to the starch. Above this temperature level, the granules undergo gelatinization whereby a paste or sol is formed. In general, small granules swell and gelatinize more slowly and at a higher temperature than large granules. The structure of the individual granules may be disrupted by mechanical means. After rupture, the granules tend to swell and gelatinize even in cold water. Large granules, such as those of potato starch, are more fragile than small granules of e.g. rice starch. Starches which have been pre-gelatinised by heat treatment and subsequently dried swell readily at temperature levels below that indicated above for non-treated starches.

Furthermore, starches of different botanical origins may vary in their chemical composition. Thus the distribution between amylose and amylopectin may vary and the content of fat may be different. In the latter respect there is a characteristic difference between grain starches and starches derived from tubers and roots. In grain starches the amylose is in the form of a lipid-amylose complex whereas in tuber and root materials the amounts of fat are insignificant. Thus, wheat starch contains about 0.23 wt% fat in terms of ether extractable components whereas potato starch contains only about 0.12 wt%. The relatively high fat content of grain starches may influence the technological characteristics thereof, e.g. as regards their use as water binding agents since it has been reported that defatting of such starches increases their water binding capacity and swelling power (Lorenz et al., 1983, Starch/Starke, 35, 123-129).

Based on these physical and chemical characteristics of different botanical forms of native starch it is contemplated that a highly useful vegetable ingredient according to the invention is one containing native starch comprising granules having an average size within the range of 10-200 μm, preferably in the range of 50-150 μm and which is substantially free from fat, such as less than 0.15 wt% fat.

In addition to the characteristics explained above, starch of plant tubers and plant roots have a high water binding capacity which make such vegetable materials useful in the present invention. As an example, potato starch has the highest water binding capacity of any starch which is assumed to be due to a low degree of association between the starch molecules hereof.

It has been found that dietary fiber-containing vegetable ingredients comprising at least 50 wt% of native starch in the dry matter are useful ingredients in the present invention. However, in particular emulsified products it may be preferable that the proportion of starch is at least 60 wt% and even more preferred that it is at least 70 wt%.

As defined above, the starch of the vegetable ingredient is native starch. In the present context the term "native" indicates that the starch is substantially in the form in which it is present in the fresh plant material and that it has not to any substantial extent been chemically or enzymatically modified.

As it has defined above, a useful vegetable ingredient has a native dietary fiber content of the dry matter which is at least 5 wt% and a dry matter native starch content of at least 50 wt%, the weight ratio between dietary fiber and starch being in the range of 1:32 to 1:1. In specific embodiments, a preferred dietary fiber-:starch ratio is in the range of 1:20 to 1:2, more preferred in the range of 1:15 to 1:3 and most preferred in the range of 1:10 to 1:4.

In one embodiment of the invention, the vegetable ingredient is a native non-fractionated plant material selected from the group consisting of plant tuber materials, plant root materials, cereal grains and dicotyledonous plant seeds. In the present context, the term "non-fractionated" is used to indicate that the composition of the dry matter of the plant material as used is substantially unaltered relative to the composition of the plant material in its fresh state.

Useful native non-fractionated plant materials include plant materials which are in the fresh state and having an inherent water content which is preferably at least 70 wt% such as fresh plant tuber materials and plant root materials. Typical examples of fresh tuber materials are potatoes and useful plant root materials include tapioca roots, cassava roots and arrowroots. In useful embodiments, such fresh plant materials are in a pre-cooked form. It is contemplated that i.a. the swelling of starch resulting from the pre-cooking step increases the water binding capability of the vegetable ingredient. Furthermore, the pre-cooking will result in a tender or soft texture of the material which facilitates an optionally required comminution step. Suitable time/temperature conditions for precooking varies according to the type of vegetable material. As an example peeled potatoes are pre-cooked by boiling in open air for about 20 minutes or in a pressure cooker for a time period sufficient to obtain the same tenderness as that obtained by the above open air boiling.

In further embodiments of the invention the vegetable ingredient is selected from dry non-fractionated plant materials having e.g. a water content which is at the most 20 wt%. Such dry materials may be selected from plant tuber materials, plant root materials, cereal grains and dicotyledonous plant seeds having a content of dietary fiber and starch as defined herein. Examples of suitable dry plant materials include dried pre-cooked potatoes, lentils, wheat kernels, rye kernels, barley groats and wheat wholemeal.

A further useful vegetable ingredient as defined herein may be a mixture of a separated native starch component and a separated native dietary fiber component which is less than 50% water soluble. As an example, a vegetable ingredient may be a mixture of a separated native starch component such as separated potato starch, arrowroot starch or grain starch and a separated native dietary fiber component e.g. being selected from potato fiber, beet fiber, pea fiber, soy hulls, potato pulp or fruit pulp. As used herein, potato pulp is defined as the potato waste material remaining when starch has been partially extracted from the raw potatoes in an industrial potato starch manufacturing process. A typical composition of an industrially prepared potato pulp is as follows (wt%): starch 30%, cellulose 25-30%, hemicellulose 10-15%, pectic substances 15%, ashes 5% and protein 5%. Such mixtures are advantageously subjected to a heat treatment while suspended in water.

A further useful vegetable ingredient as it is defined herein is obtainable by supplementing a native non-fractionated plant material of which the dry matter proportion of native dietary fiber is less than 5 wt% with a sufficient amount of native dietary fiber being less than 50% water soluble, or by supplementing a native non-fractionated plant material of which the dry matter proportion of native starch is less than 50 wt% with a sufficient amount of native starch. In this context the term "sufficient amount" is used to indicate that the amount of native dietary fiber or native starch with which the plant material is supplemented is an amount resulting in a proportion of dry matter native dietary fiber which is at least 5 wt% or a dry matter native starch proportion which is at least 50 wt%. As an example, carrots which in their dry matter have a dietary fiber content exceeding 5 wt% but a starch content which is less than 50 wt% may be supplemented with a sufficient amount of a native starch material.

In accordance with the invention, such supplementing starch or dietary fiber materials may be any material comprising native starch or native dietary fiber, optionally in the form of materials comprising native starch or native dietary fiber which has been separated from the source plant material. In this context, a useful starch-containing supplementing material may e.g. be selected from grain flours including wheat flour and maize flour and separated tuber or root starch such as potato starch or tapioca starch. Useful dietary fiber-containing supplementing materials include potato fiber, potato pulp, beet fiber, pea fiber, soybean fiber and tapioca fiber.

Advantageously, a vegetable ingredient as defined herein may be subjected to a comminution by conventional processes such as milling, grinding or roller treatment resulting in particle sizes e.g. being in the range of 0.01 to 2.0 mm. Such comminuted ingredients may e.g. be provided in the form of granules, flakes or powder.

In accordance with the invention, dry vegetable ingredient as defined above may be added in the dry form to the emulsified products, optionally together with an amount of water corresponding at least partially to the balance between the water content of a fresh and a dry plant material. However, the dry materials may preferably be hydrated prior to use by subjecting the materials to a rehydration or a soaking step at ambient temperatures or at an elevated temperature such as in the range of 25-100°C for a period of time required to obtain a suitable rehydration and/or binding of water to the dietary fiber and starch. When the dry vegetable ingredient is not in a pre-cooked form, the rehydration or soaking step is preferably carried out at an elevated temperature in order to obtain swelling of the starch.

In accordance with the invention, a suitable amount of the vegetable ingredient as herein defined is an amount which in a food product according to the invention results in a viscosity, texture, mouth feel, flavour and colour which are associated with corresponding conventional emulsified product types having a fat content in the range of 30-80 wt%, the basis of comparison being that the amount of fat which is left out in products according to the invention is replaced by the vegetable ingredient and optionally water whereas contents of other ingredients are substantially maintained.

Accordingly, useful amounts of the vegetable ingredient include amounts in the range of 0.5-10 wt%. As an example, it has been found that an ingredient in the form of coarsely comminuted boiled potatoes can be added in amounts up to 6-8 wt% calculated on the product without any detectable effect on the texture of the products. In specific embodiments, however, it has been found that when the amount of such an ingredient is increased to a level of 8-10 wt%, a certain particulate structure may become recognizable. It is to be expected that the above-mentioned particulate structure can be eliminated by subjecting the vegetable ingredient to a further comminution e.g. by conventional mechanical means such as milling, extrusion, blending, roller treatment or grinding. In accordance with this observation, specifically useful embodiments of the invention may include use of the vegetable ingredient in amounts being in the range of 1-5 wt%.

In one embodiment of the invention the low-fat emulsified food products contains as the vegetable ingredient a potato material. Such a material may be in the form of boiled or pressure cooked whole potatoes, dried pre-cooked potatoes e.g. in the form of a powder, flakes or granules, rehydrated dried pre-cooked potatoes. Preferably, the material when it is in the form of boiled or pressure cooked potatoes is comminuted prior to use. Optionally, a potato material as defined above may be subjected to a treatment which eliminates or reduce the content of viable microorganisms such as an irradiation process.

In the present context, a further advantageous feature of a suitable vegetable ingredient including a potato material is a bland and neutral taste which allows the material to be added in amounts within the defined range without any detectable adverse effects on the flavour of the emulsified products.

The aqueous phase of emulsified food products according to the invention such as mayonnaises, salad dressings and oil-in-water emulsion sauces may contain further edible ingredients such as thickening agents, acidifying agents, sweetening agents, salt, preservatives, antioxidants or flavouring agents.

Thickening agents as defined below are widely used in the food industry as auxiliary ingredients. Thickening agents as defined herein are also frequently referred to as gelling or stabilizing agents due to their ability to form i hydrocolloids. In the present context, thickening agents are defined as viscosity enhancing polysaccharide hydrocolloids which are more than 90% water soluble, typically being selected from modified starches, partially hydrolyzed starches, alginic acid or salts or esters thereof, water soluble cellulose derivatives such as carboxymethylcellulose and hydroxypropyl methylcellulose, vegetable or microbially derived gums, pectins, carrageenans and mucilages.

When used as thickening agents in emulsified food products, starches are typically starches which have been modified e.g. by heating with addition of chemical reagents. Such a treatment may result in starch products having technologically advantageous properties such as thin-boiling or chlorinated starches. Typical examples of modified starches which are commonly used as thickening agents include acetylated distarch adipate, acetylated distarch phosphate and hydroxypropyl distarch phosphate. Furthermore, starches which have been partially hydrolyzed e.g. by acid or base treatment or enzymatically may be useful thickening agents in food products according to the invention. Such hydrolyzed starches are typically referred to as dextrins or maltodextrins.

Typically, commercial thickening ingredients for industrial manufacturing of emulsified food products comprise a mixture of vegetable hydrocolloids. As an example such a thickening ingredient mixture may comprise one or more modified starches and one or more highly water soluble dietary fiber components including guar gum, xanthan gum, locust bean gum and propylene glycol alginate. The ratio between a modified starch component and the dietary fiber hydrocolloids varies i.a. according to desired content of the fat phase in the product to be manufactured, the proportion of modified starch generally being increased when the product has a relative low fat content. In typical thickening ingredient mixtures the weight ratio between the dietary fiber hydrocolloids and the modified starch component is in the range of 1:9 to 1:1. In an emulsified product having a high fat content the ratio is typically in the range of 1:7 to 1:5 whereas the ratio in "light" products may typically be in the range of 1:9 to 1:5.

The amount of the thickening ingredient added to an emulsified food product of the present types depends on the viscosity which is desirable in that particular product. In mayonnaises, the viscosity is typically in the range of 100-400 kg/m·s (100.000-400.000 cps) when determined as defined herein, in salad dressings and in warm sauces typically in the range of 30-100 kg/m·s (30.000-100.000). Such viscosity levels may typically be obtained by the addition of 3-5 wt% of a commercial thickening ingredient mixture. As it has been explained above, a higher amount of a thickening ingredient may result in unacceptable product texture and mouth feel, in particular when the product is one having a low fat content.

Preferably, products according to the invention such as mayonnaises, salad dressings and certain types of emulsion sauces has a pH in the range of 3.5 to 5.0. Accordingly, a sufficient amount of an edible acidifying agent or a mixture of such agents are added to these products. Suitable acidifying agents may be selected from vinegar, citric acid, lactic acid and malic acid.

Suitable preservatives are selected from preservatives which within the pH range defined above has an antimicrobial effect on spoilage organisms and pathogenic organisms which are capable of surviving or multiplying in the product. Examples of suitable preservatives are potassium sorbate, sodium benzoate and alkyl parahydroxy benzoates.

The products according to the invention may furthermore comprise one or more flavouring agents, the types of which depend primarily on the desired flavour associated with a particular product type. Examples of suitable flavouring agents are mustard, chervil, tarragon, lemon and pepper.

In a further aspect, the present invention relates to a texture-improving composition as previously defined containing a vegetable ingredient as defined above and at least one thickening agent as also defined above. As used herein, the term "texture-improving" refers to the capability of the composition when used according to the invention to provide in an oil-in-water emulsion food product having a fat content which is at the most 30 wt%, a desired viscosity being in the range of 30-400 kg/m·s (30000-400000 cps) when determined as defined in the below examples, a mouth feel and a texture which is associated with an emulsion food product having a fat content in the range of 30-80 wt% and which does not contain the composition.

A preferred weight ratio between the thickening agents and the vegetable ingredient of the composition is in the range of 1:10 to 10:1, a more preferred weight ratio being in the range of 1:2 to 2:1. The composition may if desired contain further ingredients selected from the groups of ingredients defined above which are useful in the making of products according to the invention such as fat, emulsifying agents including proteins, sweetening agents, preservatives or flavouring agents.

In one embodiment, the composition comprises as the vegetable ingredient dried pre-cooked potatoes but it will be understood that any vegetable ingredient as defined herein may be used. As an example, a useful texture-improving composition may comprise as the thickening agent a mixture of modified starch such as distarch adipate, guar gum, xanthan gum, propylene glycol alginate and locust bean gum, the ratio between the water soluble dietary fiber components and the modified starch being 1:9 and as the vegetable ingredient a dried pre-cooked potato material.

The texture-improving composition according to the invention is preferably in a dry powder form having a water content which is at the most 20 wt%. The powder may optionally contain further edible compounds which are useful in the making of powders such as anticaking agents, bulking agents or water absorbing agents.

In a still further aspect of the invention there is provided a process for making a stably emulsified food product. As previously defines, the process comprises mixing 1-20 wt% of an edible fat, an emulsifying agent and an aqueous phase, to obtain the food product.

In a specific embodiment, the aqueous phase may be preheated to a temperature in the range of 25-100°C prior to mixing with the fat phase. In this context, a preferred temperature range is 70-90°C, 75-85°C being even more preferred. It is contemplated that such a pre-treatment may advantageously be used as a means of obtaining swelling of the starch of the vegetable ingredient and a useful degree of hydration of the dietary fiber component hereof.

The process for making the product according to the invention may be carried out in any conventional equipment which is suitable for making oil-in-water emulsion food products having a dispersed fat phase in excess of 30 wt%, and in accordance with any suitable conventional mixing procedure which is known in the art.

In industrially useful embodiments of the process, the vegetable ingredient is in a dry comminuted form such as a powder, a granulate or it is provided in the form of dry flakes. However, it may also advantageously be provided in a non-comminuted pre-cooked form. As an example, pre-cooked potatoes which are commercially available in plastic foil bags of a suitable size and weight may be used. When such a non-comminuted vegetable ingredient material is preferred it may, particularly in small-scale production be advantageous that the material be pre-comminuted in order to achieve a suitably small particle size such a particle size in the range of 0.01-2.0 mm. In the present context the term "suitably small" refers to a size of the particles where ingredient particles will be substantially unrecognizable in the emulsified products containing the ingredient in the above-defined amounts. The pre-comminution step is conveniently carried out by well-known comminution procedures such as milling, extrusion, blending, roller treatment or grinding.

Typically, the present emulsified products will be provided in the form resulting from the process according to the invention. However, it may be interesting for the food industry to provide the products in a form where the aqueous phase after preparing the emulsion is partially removed under conditions which will preserve the obtained emulsion stability, the resulting partially dehydrated product being reconstitutable in such a way that the original composition and characteristics of the emulsified product is essentially regained. Removal of water from the product may be obtained by conventional industrial drying procedures, optionally modified to preserve the emulsion stability. Such procedures include as examples freeze-drying and spray-drying.

When prepared, the emulsified food product according to the invention may conveniently form part of mixtures of the product and other suitable food ingredients such as meat, shellfish, fruit or vegetables wherein the emulsified product serves as a vehicle for the other ingredients. In this context meat is understood to mean any edible tissue including offal products such as liver, kidney or sweetbread derived from an edible animal including mammals, birds and fish. The particle size of the other suitable ingredients may vary according to the product type but may typically be in the range of 2-10 mm.

The invention is illustrated in the following examples.

EXAMPLE 1

Mayonnaises containing 12 wt% fat

In the following Examples concerning the making of low-fat mayonnaises, a typical example of a "light" mayonnaise recipe containing a fat phase of 30 wt% as shown below was used as a reference:

Ingredient

| | |
|---|---|
| Thickening ingredient mixture | 120 g |
| Water | 1551 g |
| Sugar | 72 g |
| Pasteurized egg yolks | 120 g |
| Soybean oil | 900 g |
| Vinegar, 12.0 vol% | 150 g |
| Mustard paste | 36 g |
| Potassium sorbate | 3 g |
| Sodium benzoate | 3 g |

The mixture of thickening ingredients (Palsgaard 5201™) contains modified starch (43 wt%), guar gum, locust bean gum and sodium alginate (total water soluble fiber content 8 wt%) and protein (12 wt%)

In initial experiments, mayonnaises with 24 wt% dispersed fat phase and 2 wt% mashed boiled potatoes and with 12 wt% fat phase and 0, 4 and 6 wt%, respectively of mashed boiled potatoes were prepared in order to adjust the acid content and the content or stabilizing ingredients. It was found that a mayonnaise containing 24 wt% fat and 2 wt% mashed boiled potatoes has approximately the same product quality as regards viscosity, texture, mouth feel and colour as the above reference product containing 30 wt% fat and no mashed potatoes.

However, in the initial test products containing only 12 wt% fat, the commercial thickening ingredient mixture could when used in conventional amounts not in itself compensate for a significant reduction in product quality resulting from the lower fat content. Therefore, the present experiments were carried out to study the effect of mashed boiled potatoes on product quality characteristics in fat-reduced mayonnaises comprising a fat phase of 12 wt%.

A series of 4 mayonnaise products containing a dispersed fat phase of 12 wt% was prepared according to the following recipes:

## Test mayonnaise product No.

| Ingredient, g | 1 | 2 | 3 | 4 |
|---|---|---|---|---|
| Mashed boiled potatoes | 0 | 120 | 180 | 240 |
| Thickening ingredient mixture | 120 | 120 | 120 | 120 |
| Sugar | 72 | 72 | 72 | 72 |
| Salt | 45 | 45 | 45 | 45 |
| Egg yolk | 120 | 120 | 120 | 120 |
| Water | 2091 | 1971 | 1911 | 1851 |
| Soybean oil | 360 | 360 | 360 | 360 |
| Vinegar, 12 vol% | 150 | 150 | 150 | 150 |
| Mustard paste | 36 | 36 | 36 | 36 |
| Potassium sorbate | 3 | 3 | 3 | 3 |
| Sodium benzoate | 3 | 3 | 3 | 3 |
| Total | 3000 | 3000 | 3000 | 3000 |

Accordingly, the mayonnaise test product recipes contained the following amounts of a vegetable ingredient: 0, 4, 6 and 8 wt%. Relative to the reference product the omitted fat was replaced in test product No. 1 by the equivalent amount of water, in test product No. 2 by a mixture of mashed boiled potatoes and water in a weight ratio of 1:3.5, in test product No. 3 by a mixture of mashed boiled potatoes and water in a ratio of 1:2 and in test product No. 4 by a mixture in which the ratio between boiled potatoes and water is 1:1.25.

The boiled mashed potato ingredient was prepared by comminuting boiled potatoes into particles having a diameter of less than about 1.5 mm by pressing the boiled potatoes through a sieve.

The mayonnaises were prepared by means of a KORUMA™ laboratory emulsion turbine. The aqueous phase comprising pasteurized egg yolk and the water was poured into the mixing vessel of the turbine and the dry ingredients (sugar, salt, sorbate, and benzoate) and where relevant the mashed boiled potato ingredient were added followed by mixing for 2 minutes under vacuum. Subsequently, the oil was added slowly to the resulting aqueous phase and mixing was continued until the two phases were homogeneously emulsified. Finally, the vinegar and the mustard mixture were added and mixed with the emulsion.

The resulting mayonnaises were kept overnight at 8°C prior to assessment of their characteristics regarding texture, consistency, appearance and taste. Furthermore, pH and viscosity was measured. Viscosity measurements were carried out by means of a Brookfield™ RVT Viscometer using a T-spindle No. B at 2.5 rpm.

The results of the assessments and measurements are summarized in the below table:

## TABLE 1

### Characteristics of mayonnaises containing 12 wt% fat

Mayonnaise No.

| Parameter | 1 | 2 | 3 | 4 |
|---|---|---|---|---|
| pH | 4.0 | 4.0 | 4.2 | 4.3 |
| Viscosity, kg/m·s (cps x $10^3$) | 88.0 | 113.6 | 105.6 | 112.0 |
| Texture assessment | thin, watery | good | good | gritty |
| Mouth feel | thin | rich | rich | rich |
| Colour | pale | pale | pale | pale |

There was no detectable taste of the mashed potato ingredient. At the highest amount of mashed potatoes a somewhat gritty or particulate texture occurred.

In the test product not comprising the vegetable ingredient, the texture was assessed as being thin and watery which was reflected in a mouth feel which was significantly poorer than that experienced with conventional mayonnaises having a fat content above 20 wt% such as 30 wt%. These results clearly indicate that a commercially used thickening ingredient mixture when used in an amount which is useful in making mayonnaises comprising a fat content above 20 wt% cannot compensate for a reduced viscosity or changes of texture and richness which will occur in a mayonnaise in which the fat content is reduced to 12 wt%. However, a mayonnaise with this low fat content acquires a viscosity and a consistency which is comparable to those of a mayonnaise having a fat content which is at least 30 wt% when a vegetable ingredient as defined herein is added in the proportions indicated above.

The test products were kept at about 5°C for 4 weeks and subsequently inspected for any signs of emulsion instability. No visually detectable separation of the two phases were found and no changes of viscosity were observed.

EXAMPLE 2

Mayonnaises containing 6 wt% fat

A series of 4 mayonnaise products containing a dispersed fat phase of only 6 wt% was prepared according to the following recipes:

Test mayonnaise product No.

| Ingredient, g | 1 | 2 | 3 | 4 |
|---|---|---|---|---|
| Mashed boiled potatoes | 0 | 180 | 240 | 300 |
| Thickening ingredient mixture | 128 | 128 | 128 | 128 |
| Sugar | 78 | 78 | 78 | 78 |
| Salt | 50 | 50 | 50 | 50 |
| Egg yolk | 120 | 120 | 120 | 120 |
| Water | 2242 | 2062 | 2002 | 1942 |
| Soybean oil | 180 | 180 | 180 | 180 |
| Vinegar, 12 vol% | 157 | 157 | 157 | 157 |
| Mustard paste | 39 | 39 | 39 | 39 |
| Potassium sorbate | 3 | 3 | 3 | 3 |
| Sodium benzoate | 3 | 3 | 3 | 3 |
| Total | 3000 | 3000 | 3000 | 3000 |

Accordingly, the mayonnaise test product recipes contained the following amounts of a vegetable ingredient: 0, 6, 8 and 10 wt%. Relative to the reference product the omitted fat was replaced in test product No. 1 by 691 g of water and 29 g of the other ingredients, in test product No. 2 by a mixture of other ingredients and mashed boiled potatoes and water in a weight ratio of 1:2.9, in test product No. 3 by a mixture of other ingredients and boiled potatoes and water in a ratio of 1:1.9 and in test product No. 4 by a mixture of the same ingredient in which the ratio between boiled potatoes and water is 1:1.3.

The process of making the above mayonnaise test products and the assessments and measurements of the finished products were carried out essentially in the same way as that defined above for mayonnaises containing 12 wt% of soybean oil.

The results of the assessments and measurements are summarized in the below table:

TABLE 2

## Characteristics of mayonnaises containing 6 wt% fat

Mayonnaise No.

| Parameter | 1 | 2 | 3 | 4 |
|---|---|---|---|---|
| pH | 4.0 | 4.1 | 4.1 | 4.2 |
| Viscosity, kg/m·s (cps x $10^3$) | 92.8 | 124.8 | 115.2 | 124.8 |
| Texture assessment | thin | good | good/some-what gritty | gritty |
| Mouth feel | thin | acceptable | rich | rich |
| Colour | yellowish | yellowish | yellowish | yellowish |

There was no detectable taste of the mashed potato ingredient. At the highest amounts of mashed potatoes (8-10 wt%) a somewhat gritty or particulate consistency occurred. The results indicate that a conventional amount of a commercially used stabilizing ingredient mixture cannot compensate for a reduced viscosity or changes of texture and richness which will occur in a mayonnaise having a fat content of 6 wt%. However, a mayonnaise with this low fat content acquires a viscosity and a texture which is fully acceptable and comparable to those of a mayonnaise having a fat content which is at least 30 wt% when a vegetable ingredient as defined herein is added in the proportions indicated above.

The test products were kept at about 5°C for 4 weeks and subsequently inspected for any signs of emulsion instability. No visually detectable separation of the two phases were found and no changes of viscosity were observed.

EXAMPLE 3

Mayonnaise containing 3 wt% fat

A mayonnaise product containing a dispersed fat phase of 3 wt% was prepared according to the following recipe:

EP 0 526 564 B1

Ingredient

| | |
|---|---|
| Mashed boiled potatoes | 240 g |
| Thickening ingredient mixture | 128 g |
| Sugar | 78 g |
| Salt | 49 g |
| Egg yolk | 120 g |
| Water | 2093 g |
| Soybean oil | 90 g |
| Vinegar, 12 vol% | 157 g |
| Mustard paste | 39 g |
| Potassium sorbate | 3 g |
| Sodium benzoate | 3 g |

The process of making the above mayonnaise product and the assessments and measurements of the finished product were carried out essentially as defined in Example 1.

The mayonnaise had a texture essentially as that of a mayonnaise with 30 wt% fat and gave a mouth feel being characterised as rich. The test product had a pH-value of 3.9 and a viscosity of 97.6 kg/m·s (97.600 cps).

The test product was kept at about 5°C for 4 weeks and subsequently inspected for any signs of emulsion instability. No visually detectable separation of the two phases were found and no changes of viscosity were observed.

EXAMPLE 4

Mayonnaise substitute products not containing fat

Finally, a series of mayonnaise substitute products wherein the oil phase was completely replaced by pre-cooked mashed potatoes were prepared to study whether acceptable mayonnaise-like products can be made without a dispersed fat phase.

A series of 4 mayonnaise substitute products not containing a dispersed fat phase was prepared according to the following recipes:

14

Test mayonnaise substitute product No.

| Ingredient, g | 1 | 2 | 3 | 4 |
|---|---|---|---|---|
| Mashed boiled potatoes | 0 | 240 | 360 | 480 |
| Thickening ingre-dient mixture | 135 | 135 | 135 | 135 |
| Sugar | 90 | 90 | 90 | 90 |
| Salt | 54 | 54 | 54 | 54 |
| Egg yolk | 120 | 120 | 120 | 120 |
| Water | 2385 | 2145 | 2025 | 1905 |
| Soybean oil | 0 | 0 | 0 | 0 |
| Vinegar, 12 vol% | 165 | 165 | 165 | 165 |
| Mustard paste | 45 | 45 | 45 | 45 |
| Potassium sorbate | 3 | 3 | 3 | 3 |
| Sodium benzoate | 3 | 3 | 3 | 3 |
| Total | 3000 | 3000 | 3000 | 3000 |

The process of making the above mayonnaise substitute products and the assessments and measurements of the finished products were carried out essentially in the same way as that defined above in Example 1.

The results of the assessments and measurements are summarized in the below table:

TABLE 4

Characteristics of mayonnaise substitute products not containing a dispersed fat phase

Mayonnaise substitute product No.

| Parameter | 1 | 2 | 3 | 4 |
|---|---|---|---|---|
| pH | 3.9 | 4.0 | 4.0 | 4.2 |
| Viscosity, kg/m·s (cps x $10^3$) | 92.8 | 118.4 | 129.6 | 144.0 |
| Texture assessment | thin | gritty | gritty | very gritty |
| Mouth feel | thin, watery | starchy | starchy | starchy |
| Colour | yellow | yellow | yellow | yellow |

At the highest amount of pre-cooked mashed potatoes there was a detectable taste of potato and a very gritty or particulate consistency occurred. The above results indicate that an amount of a commercially used thickening ingredient mixture which is useful in making mayonnaises having a fat content of e.g. 30 wt% and/or a vegetable ingredient according to the invention is not capable of compensating the effect of a dispersed fat phase on texture and richness normally being associated with mayonnaise.

**General conclusions of the experiments disclosed in Examples 1-4**

Overall, the experiments disclosed in the above Examples 1-4 have clearly shown that the present invention provides the means of preparing stable oil-in-water mayonnaise emulsions wherein the dispersed fat phase has been reduced to levels as low as 12 to 3 wt% having viscosity and texture characteristics, taste and mouth feel characteristics comparable to mayonnaises having a fat content which is 30 wt% or higher. At certain high amounts of vegetable ingredient according to the invention a particulate-related gritty texture may occur. It is contemplated that this phenomenon if desired can be reduced or eliminated by comminuting the vegetable ingredient further, e.g. by milling or treatment in a roller equipment.

EXAMPLE 5

Salad dressings containing 10 wt% fat

In an initial experiment, a salad dressing containing a moderately reduced fat phase of 15 wt% as shown below was prepared as a reference product. In order to achieve a reasonably acceptable texture, the amount of thickening ingredient mixture was increased from 1 wt% which is typically used in dressings containing at least 20 wt% fat, to 3.5 wt%.

```
Ingredient
```

| Ingredient | Amount |
|---|---|
| Thickening ingredient mixture | 105 g |
| Water | 1797 g |
| Sugar | 240 g |
| Salt | 30 g |
| Pasteurized egg yolks | 150 g |
| Soybean oil | 450 g |
| Vinegar, 10.0 vol% | 135 g |
| Malic acid, powder | 12 g |
| Mustard paste | 75 g |
| Potassium sorbate | 3 g |
| Sodium benzoate | 3 g |

The mixture of salad dressing thickening ingredients (Palsgaard 5306™) contains modified starch (90 wt%), guar gum, locust bean gum, xanthan gum and propylene glycol alginate (total water soluble fiber content 10 wt%).

The reference product had a pH-value of 3.5 and a viscosity of 67.2 kg/m·s (67.200 cps) when determined as defined above. The texture was characterized as being somewhat thick and on tasting the product gave a mouth feel characterized as creamy and rich.

A series of 3 salad dressing products containing a dispersed fat phase of 10 wt% was prepared according to the following recipes:

Test salad dressing product No.

| Ingredient, g | 1 | 2 | 3 |
|---|---|---|---|
| Mashed boiled potatoes | 0 | 60 | 150 |
| Thickening ingredient mixture | 120 | 120 | 120 |
| Sugar | 255 | 255 | 255 |
| Salt | 33 | 33 | 33 |
| Egg yolk | 150 | 150 | 150 |
| Water | 1914 | 1854 | 1764 |
| Soybean oil | 300 | 300 | 300 |
| Vinegar, 12 vol% | 135 | 135 | 135 |
| Malic acid, powder | 12 | 12 | 12 |
| Mustard paste | 75 | 75 | 75 |
| Potassium sorbate | 3 | 3 | 3 |
| Sodium benzoate | 3 | 3 | 3 |
| Total | 3000 | 3000 | 3000 |

Accordingly, the test products had a content of comminuted potatoes of 0, 2 and 5 wt%, respectively.

The process of making the above salad dressing products and the assessments and measurements hereof were carried out essentially as defined in Example 1. The results of the assessments and measurements are summarized in the below table:

TABLE 5

Characteristics of salad dressings containing 10 wt% fat phase

Salad dressing No.

| Parameter | 1 | 2 | 3 |
|---|---|---|---|
| pH | 3.6 | 3.5 | 3.7 |
| Viscosity, kg/m·s (cps x $10^3$) | 80.0 | 83.2 | 94.4 |
| Texture assessment | good/some-what thick | good/some-what thick | good/some-what thick |
| Mouth feel | acceptable | rich | rich |
| Colour | light | light | light |

EXAMPLE 6

Salad dressings containing 5 wt% fat

A series of 3 salad dressing products containing a dispersed fat phase of 5 wt% was prepared according to the following recipes:

| | Test salad dressing product No. | | |
|---|---|---|---|
| Ingredient, g | 1 | 2 | 3 |
| Mashed boiled potatoes | 0 | 120 | 300 |
| Thickening ingredient mixture | 128 | 128 | 128 |
| Sugar | 270 | 270 | 270 |
| Salt | 36 | 36 | 36 |
| Egg yolk | 150 | 150 | 150 |
| Water | 2031 | 1911 | 1731 |
| Soybean oil | 150 | 150 | 150 |
| Vinegar, 12 vol% | 142 | 142 | 142 |
| Malic acid, powder | 12 | 12 | 12 |
| Mustard paste | 75 | 75 | 75 |
| Potassium sorbate | 3 | 3 | 3 |
| Sodium benzoate | 3 | 3 | 3 |
| Total | 3000 | 3000 | 3000 |

The test products had a content of comminuted pre-cooked potatoes of 0, 4 and 10 wt%, respectively. The process of making the above salad dressing products and the assessments and measurements hereof were carried out essentially as defined above.

The results of the assessments and measurements are summarized in the below table:

## TABLE 6

<u>Characteristics of salad dressings containing 5 wt% fat phase</u>

Salad dressing No.

| Parameter | 1 | 2 | 3 |
|---|---|---|---|
| pH | 3.5 | 3.5 | 3.5 |
| Viscosity, kg/m·s (cps x $10^3$) | 76.8 | 80.0 | 105.6 |
| Texture assessment | jelly-like | rich | gritty |
| Mouth feel | thin/-watery | acceptable | acceptable |
| Colour | light | light | light |

The addition of 4 wt% of the vegetable ingredient had a significant texture-improving effect. When added in an amount of 10 wt% the ingredient, however, conferred a certain grittiness to the product. The emulsion stability was assessed after 4 weeks at about 5°C and no detectable changes of the appearance of the product was found.

EXAMPLE 7

Salad dressing containing 3 wt% fat

A salad dressing containing a dispersed fat phase of only 3 wt% and 7 wt% mashed boiled potatoes was prepared according to the following recipe:

Ingredient

| | |
|---|---:|
| Mashed boiled potatoes | 210 g |
| Thickening ingredient mixture | 128 g |
| Sugar | 270 g |
| Salt | 36 g |
| Egg yolk | 150 g |
| Water | 1881 g |
| Soybean oil | 90 g |
| Vinegar, 12 vol% | 142 g |
| Malic acid, powder | 12 g |
| Mustard paste | 75 g |
| Potassium sorbate | 3 g |
| Sodium benzoate | 3 g |
| Total | 3000 g |

The process of making the above salad dressing product and the assessments and measurements hereof were carried out essentially as defined above. The low-fat salad dressing had a pH of 3.6 and a viscosity of 102.4 kg/m·s (102.400 cps) when determined as defined in Example 1. The product had an acceptable creamy and rich texture and the mouth feel was assessed as acceptable relative to a conventional salad dressing having a fat content of 20 wt% or more.

EXAMPLE 8

Fat-reduced bearnaise sauces

As examples of oil-in-water food products in which egg yolk is not used as the emulsifying agent, a series of bearnaise sauces were prepared wherein increasing amounts of fat was replaced by equivalent amounts of a vegetable ingredient as defined herein. As the reference, a bearnaise sauce containing a fat phase of 30 wt% was prepared according to the following recipe:

Ingredient

| | |
|---|---:|
| Thickening/emulsifying ingredient mixture | 143 g |
| Water | 1726 g |
| Salt | 15 g |
| Sugar | 30 g |
| Onion, dry powder | 6 g |
| Spices | 30 g |
| Soybean oil | 900 g |
| Bearnaise flavour | 120 g |
| Vinegar, 12 vol% | 30 g |
| Total | 3000 g |

The mixture of oil-in-water sauce thickening/emulsifying ingredients (Palsgaard 5201™) contains modified starch (43 wt%), guar gum, locust bean gum and sodium alginate (total water soluble fiber content 8 wt%) and 10 wt% milk protein.

Using this recipe as the starting point, 5 test product were made in which 180, 360, 540, 720 and 900 g of soybean oil, respectively were replaced by equivalent amounts of boiled mashed potatoes. Accordingly, the resulting fat-reduced sauces had the following fat contents: 24, 18, 12, 6 and 0 wt%. The process of making the sauces were essentially as defined in Example 1. The boiled potatoes, however, were ground be means of a meat grinder. The characteristics of the test products were assessed as defined above. Prior to the assessments, the test products were heated to temperatures at which sauces of the present type is traditionally consumed.

The results of the assessments indicated that the bearnaise sauces comprising the potato ingredient in excess of 12 wt% had unacceptable textures and mouth feel. The results of assessments of sauces in which the fat phase had been reduced to 24 and 18 wt%, respectively are summarized in the below table:

## TABLE 7

### Characteristics of bearnaise sauces containing 24 or 18 wt% fat phase

Fat content of sauce

| Parameter | 24 wt% | 18 wt% |
|---|---|---|
| pH | 4.4 | 4.4 |
| Viscosity, kg/m·s (cps x $10^3$) | 102.4 | 80.0 |
| Texture assessment | slightly gritty | slightly gritty |
| Mouth feel | acceptable | acceptable |
| Colour | light | brownish |

This experiment has demonstrated that acceptable bearnaise sauces having a fat content less than 20 wt% may be obtained by using a process wherein the fat is replaced by equivalent amounts of coarsely comminuted pre-cooked potatoes and not by a mixture of such a vegetable ingredient and water as used in the above exemplified low-fat mayonnaises and salad dressings. It is assumed that a replacement of fat in emulsion sauces by such mixtures may result in improvements of the characteristics of the sauces to an extent where the making of sauces having fat contents lower than 18 wt%, is obtainable. It is furthermore contemplated that a further comminution of the vegetable ingredient will improve the characteristics of low-fat sauces containing it.

EXAMPLE 9

Emulsified chocolate spreads

An emulsified chocolate spread containing 18 wt% fat was prepared according to the below recipe and used as the starting point for making chocolate spreads in which the fat phase was reduced to 13.5 and 9 wt%, respectively by replacing the omitted fat by equivalent amounts of comminuted pre-cooked potatoes. The recipes were as follows:

## Product

| Ingredient, g | Reference | 13.5 wt% fat | 9 wt% fat |
| --- | --- | --- | --- |
| Sugar | 540 | 540 | 540 |
| Dextrose | 540 | 540 | 540 |
| Skim milk powder | 60 | 60 | 60 |
| Cocoa powder | 240 | 240 | 240 |
| Thickening agent | 15 | 15 | 15 |
| Coconut fat, m.p. 35°C | 540 | 405 | 270 |
| Water | 1062 | 1062 | 1062 |
| Potato ingredient | 0 | 135 | 270 |
| Preservatives | 3 | 3 | 3 |
| Total | 3000 | 3000 | 3000 |

The thickening agent was a commercial pectin product comprising a partly amidated low methoxyl citrus pectin (Palsgaard KP 86-453™).

The boiled potatoes were pre-comminuted by grinding. The thickening ingredient was mixed with 5 parts of sugar and the resulting mixture mixed with the remaining sugar, dextrose, skim milk powder and preservatives and this mixture of dry ingredients was added while stirring to the water pre-warmed to 35°C. The pre-comminuted potato ingredient was added to the aqueous phase and subjected to a blending herein. The resulting mixture was heated to about 75°C while stirring. The melted fat was added to the aqueous phase and the mixture heated to about 85°C and emulsified in a KORUMA™ laboratory emulsion turbine at a pressure of 50 kg/cm². Finally, the resulting homogeneously emulsified product was cooled to about 15°C in a water bath while stirring.

The characteristics of the product were assessed and the results hereof are summarized in the following table.

EP 0 526 564 B1

## TABLE 8

### Characteristics of chocolate spreads

Product

| Parameter | Reference | 13.5 wt% fat | 9 wt% fat |
|---|---|---|---|
| Texture assessment | firm/viscous | less firm | soft/watery |
| Mouth feel | rich | acceptable | watery |
| **Appearance:** | | | |
| Surface | shiny | shiny | shiny |
| On stirring | shiny | shiny/slightly gritty | gritty |

It was possible to substitute part of the fat of the reference product with an equivalent amount of the vegetable ingredient. At increasing amounts of the ingredient the product got a visually detectable grittiness which, however, could not be sensed in the mouth. It was observed that the flavour of cocoa became more penetrating in fat-reduced spreads.

EXAMPLE 10

Mayonnaises containing 3 wt% fat supplemented with different starch and dietary fiber ingredients

A mayonnaise product containing a dispersed fat phase of 3 wt% prepared according to the following recipe was used as the reference base product:

Ingredient

| | | |
|---|---|---|
| Thickening ingredient mixture | 128 | g |
| Sugar | 78 | g |
| Salt | 49 | g |
| Egg yolk | 120 | g |
| Water | 2333 | g |
| Soybean oil | 90 | g |
| Vinegar, 12 vol% | 157 | g |
| Mustard paste | 39 | g |
| Potassium sorbate | 3 | g |
| Sodium benzoate | 3 | g |

The process of making the above reference mayonnaise product as well as the below defined supplements products and the assessments and measurements of the products were carried out essentially in the same

23

way as that defined in Example 1 with the necessary modifications as dictated by supplementing product. However, in the present experiment, the viscosity was measured by means of the BROOKFIELD™ RVT Viscometer using a T-spindle No. C at 2.5 rpm.

Using the above recipe as the base, five recipes were prepared wherein all ingredients except water, thickening ingredient were kept as in the reference product and in which different supplementing ingredients were included. These variable ingredients are listed in the below table:

TABLE 9

Variable ingredients in mayonnaise recipes containing 3 wt% fat

Test product No.

| Variable ingredient, g | 1 | 2 | 3 | 4 | 5 |
|---|---|---|---|---|---|
| Thickening agent s[1) | 128 | 174 | 128 | 128 | 128 |
| Pre-cooked potatoes | 240 | 0 | 0 | 0 | 0 |
| Modified starch | 0 | 0 | 46 | 0 | 0 |
| Potato starch/- potato fiber/ water | 0 | 0 | 0 | 240 | 1046 |
| Water | 2093 | 2287 | 2287 | 2093 | 1287 |

1) A commercial thickening ingredient mixture (PALSGAARD 5217™) containing modified starch (86 wt%) and 14 wt% of a mixture of the water soluble vegetable hydrocolloids guar gum, sodium alginate, xanthan gum and locust bean gum.

For test product No. 1, the pre-cooked potatoes were comminuted by grinding as defined previously. In test product No. 3, the modified starch was a commercial product, PASELLI P™. In test product No. 4, a mixture of 40 g of commercial potato starch and 6 g of a commercial potato fiber product was added in cold water. For test product No. 5, the same amounts of the potato starch and the potato fiber was added to 1000 g of water and this suspension was heated to 80°C while stirring gently followed by cooling at ambient temperature prior to adding to the aqueous phase of the test product to be prepared.

The results of the assessments of the reference base product and the test products are shown in the following two tables:

## TABLE 10 A

### Characteristics of base product and test products 1-2

Test product No.

| Parameter | Base | 1 | 2 |
|---|---|---|---|
| pH | 3.9 | 4.0 | 4.1 |
| Viscosity, kg/m·s (cps x $10^3$) | 100.0 | 140.0 | 208.8 |
| Texture assessment | thin/no richness | good/slightly gritty | sticky/pudding-like |
| Mouth feel | thin/no creaminess | creamy | creamy/pudding-like |
| Colour | light yellow | light yellow | light yellow |

## TABLE 10 B

### Characteristics of test products 3-5

Test product No.

| Parameter | 3 | 4 | 5 |
|---|---|---|---|
| pH | 4.1 | 4.0 | 4.0 |
| Viscosity, kg/m·s (cps x $10^3$) | 216.0 | 116.0 | 152.0 |
| Texture | sticky/pudding-like | gelly | slightly gelly |
| Mouth feel | sticky/-creamy | creamy | creamy/-rich |
| Colour | light yellow | light yellow | light yellow |

The above results indicate that texturally acceptable mayonnaises containing 3 wt% fat are not obtainable by simply increasing the amount of thickening agents or by adding an amount of modified starch. However, such low-fat products having acceptable viscosity, texture and mouth feel were obtainable by adding to the base recipe 8 wt% of comminuted pre-cooked potatoes or 1.5 wt% of a dry vegetable ingredient as defined herein which ingredient prior to the addition is pre-warmed in water to 80°C.

## Claims

**Claims for the following Contracting States : AT, BE, CH, DE, DK, FR, GB, IT, LI, LU, NL, SE**

1. A stably emulsified food product containing 1-30 wt% of a dispersed fat phase, at least one emulsifying agent and a continuous aqueous phase, the aqueous phase containing 0.1-20 wt% dry matter of a vegetable ingredient comprising native dietary fiber which is less than 50% water soluble, and native starch, in a weight ratio which is in the range of 1:32 to 1:1, the proportion of dietary fiber being at least 5 wt% of the vegetable ingredient dry matter when determined as non-starch polysaccharides (NSP), and the proportion of starch being at least 50 wt% of the vegetable ingredient dry matter, and a thickening agent which is more than 90% water soluble.

2. A food product according to claim 1 wherein the amount of the dispersed fat phase is at the most 20 wt%.

3. A food product according to claim 2 wherein the amount of the dispersed fat phase is at the most 15 wt%, preferably at the most 10 wt%, more preferably at the most 5 wt% and most preferably at the most 3 wt%.

4. A food product according to claim 1 wherein the aqueous phase contains the vegetable ingredient dry matter in an amount being in the range of 0.5-10 wt% and preferably in the range of 1-5 wt%.

5. A food product according to claim 1 wherein the proportion of native dietary fiber in the vegetable ingredient dry matter is at least 10 wt%.

6. A food product according to claim 5 wherein the proportion of native dietary fiber in the vegetable ingredient dry matter is at least 15 wt%.

7. A food product according to claim 1 wherein the vegetable ingredient comprises native dietary fiber and native starch in a weight ratio which is in the range of 1:20 to 1:2, preferably in the range of 1:15 to 1:3 and most preferably in the range of 1:10 to 1:4.

8. A food product according to claim 1 wherein the vegetable ingredient is a native non-fractionated plant material.

9. A food product according to claim 8 wherein the vegetable ingredient is selected from plant tuber materials, plant root materials, cereal grains and dicotyledonous plant seeds.

10. A food product according to claim 9 wherein the plant tuber material is potatoes.

11. A food product according to claim 9 wherein the plant root material is selected from tapioca roots, cassava roots and arrowroots.

12. A food product according to claim 8 wherein the native non-fractionated plant material is pre-cooked.

13. A food product according to claim 1 wherein the vegetable ingredient is a mixture of a separated native starch component and a separated native dietary fiber component which is less than 50% water soluble.

14. A food product according to claim 1 wherein the vegetable ingredient is obtained by supplementing a native non-fractionated plant material of which the dry matter proportion of native dietary fiber is less than 5 wt% with a sufficient amount of native dietary fiber.

15. A food product according to claim 1 wherein the vegetable ingredient is obtained by supplementing a native non-fractionated plant material of which the dry matter proportion of native starch is less than 50 wt% with a sufficient amount of native starch.

16. A food product according to claim 14 or 15 wherein the supplemented vegetable ingredient is subjected to a heat treatment.

17. A food product according to any of preceding claims which is a food product selected from the group consisting of a mayonnaise product, a salad dressing a sauce product and a spreadable product.

18. A texture-improving composition for use in making an emulsified food product, the composition containing a vegetable ingredient comprising native dietary fiber which is less than 50% water soluble, and native starch, in a weight ratio which is in the range of 1:32 to 1:1, the proportion of dietary fiber being at least 5 wt% of the vegetable ingredient dry matter when determined as non-starch polysaccharides (NSP), and the proportion of starch being at least 50 wt% of the vegetable ingredient dry matter, and at least one thickening agent which is more than 90% water soluble, the weight ratio between thickening agents and the vegetable ingredient being in the range of 1:20 to 20:1.

19. A composition according to claim 18 wherein the thickening agent is selected from the group consisting of a modified starch, a partially hydrolyzed starch, alginic acid or salts or esters thereof, a water soluble cellulose derivative, a gum of vegetable or microbial origin, a carrageenan and tragacanth.

20. A composition according to claim 18 wherein the proportion of native dietary fiber in the vegetable ingredient dry matter is at least 10 wt%.

21. A composition according to claim 20 wherein the proportion of native dietary fiber in the vegetable ingredient dry matter is at least 15 wt%.

22. A composition according to claim 18 wherein the vegetable ingredient comprises native dietary fiber and native starch in a weight ratio which is in the range of 1:20 to 1:2, preferably in the range of 1:15 to 1:3 and most preferably in the range of 1:10 to 1:4.

23. A composition according to claim 18 wherein the vegetable ingredient is a native non-fractionated plant material.

24. A composition according to claim 23 wherein the vegetable ingredient is selected from plant tuber materials, plant root materials, cereal grains and dicotyledonous plant seeds.

25. A composition according to claim 24 wherein the plant tuber material is potatoes.

26. A composition according to claim 24 wherein the plant root material is selected from tapioca roots, cassava roots and arrowroots.

27. A composition according to claim 23 wherein the native non-fractionated plant material is pre-cooked.

28. A composition according to claim 18 wherein the vegetable ingredient is a mixture of a separated native starch component and a separated native dietary fiber component which is less than 50% water soluble.

29. A composition according to claim 18 wherein the vegetable ingredient is obtained by supplementing a native non-fractionated plant material of which the dry matter proportion of native dietary fiber is less than 5 wt% with a sufficient amount of native dietary fiber.

30. A composition according to claim 18 wherein the vegetable ingredient is obtained by supplementing a native non-fractionated plant material of which the dry matter proportion of native starch is less than 50 wt% with a sufficient amount of native starch.

31. A composition according to any of preceding claims which has a water content being at the most 20 wt%.

32. A composition according to claim 18 wherein the weight ratio between thickening agent and the vegetable ingredient is in the range of 1:10 to 10:1.

33. A process for making a stably emulsified food product comprising mixing 1-30 wt% of an edible fat, at least one emulsifying agent and an aqueous phase containing 0.1-20 wt% dry matter of a vegetable ingredient comprising native dietary fiber which is less than 50% water soluble, and native starch, in a weight ratio which is in the range of 1:32 to 1:1, the proportion of dietary fiber being at least 5 wt% of the vegetable ingredient dry matter when determined as non-starch polysaccharides (NSP), and the proportion of starch being at least 50 wt% of the vegetable ingredient dry matter, and at least one thickening agent which is more than 90% water soluble, the weight ratio between thickening agent and the vegetable ingredient being in the range of 1:20 to 20:1, to obtain an oil-in-water emulsion.

34. A process according to claim 33 wherein the amount of the edible fat is at the most 20 wt%.

27

**35.** A process according to claim 34 wherein the amount of the edible fat is at the most 15 wt%, preferably at the most 10 wt%, more preferably at the most 5 wt% and most preferably at the most 3 wt%.

**36.** A process according to claim 33 wherein the aqueous phase contains the vegetable ingredient dry matter in an amount being in the range of 0.5-10 wt% and preferably in the range of 1-5 wt%.

**37.** A process according to claim 33 wherein the proportion of native dietary fiber in the vegetable ingredient dry matter is at least 10 wt%.

**38.** A process according to claim 37 wherein the proportion of native dietary fiber in the vegetable ingredient dry matter is at least 15 wt%.

**39.** A process according to claim 33 wherein the vegetable ingredient comprises native dietary fiber and native starch in a weight ratio which is in the range of 1:20 to 1:2, preferably in the range of 1:15 to 1:3 and most preferably in the range of 1:10 to 1:4.

**40.** A process according to claim 33 wherein the vegetable ingredient is a native non-fractionated plant material.

**41.** A process according to claim 40 wherein the vegetable ingredient is selected from plant tuber materials, plant root materials, cereal grains and dicotyledonous plant seeds.

**42.** A process according to claim 41 wherein the plant tuber material is potatoes.

**43.** A process according to claim 41 wherein the plant root material is selected from tapioca roots, cassava roots and arrowroots.

**44.** A process according to claim 40 wherein the native non-fractionated plant material is pre-cooked.

**45.** A process according to claim 33 wherein the vegetable ingredient is a mixture of a separated native starch component and a separated native dietary fiber component which is less than 50% water soluble.

**46.** A process according to claim 33 wherein the vegetable ingredient is obtained by supplementing a native non-fractionated plant material of which the dry matter proportion of native dietary fiber is less than 5 wt% with a sufficient amount of native dietary fiber.

**47.** A process according to claim 33 wherein the vegetable ingredient is obtained by supplementing a native non-fractionated plant material of which the dry matter proportion of native starch is less than 50 wt% with a sufficient amount of native starch.

**48.** A process according to claim 33 wherein the thickening agent(s) and the vegetable ingredient is added in the form of a texture-improving composition as defined in claim 18.

**49.** A process according to claim 48 wherein the texture-improving composition has a water content being at the most 20 wt%.

**50.** A process according to claim 33 wherein the weight ratio between thickening agent(s) and the vegetable ingredient in the texture-improving composition is in the range of 1:10 to 10:1.

**Claims for the following Contracting States : ES, GR**

**1.** A process for making a stably emulsified food product comprising mixing 1-30 wt% of an edible fat, at least one emulsifying agent and an aqueous phase containing 0.1-20 wt% dry matter of a vegetable ingredient comprising native dietary fiber which is less than 50% water soluble, and native starch, in a weight ratio which is in the range of 1:32 to 1:1, the proportion of dietary fiber being at least 5 wt% of the vegetable ingredient dry matter when determined as non-starch polysaccharides (NSP), and the proportion of starch being at least 50 wt% of the vegetable ingredient dry matter, and at least one thickening agent which is more than 90% water soluble, to obtain an oil-in-water emulsion.

**2.** A process according to claim 1 wherein the weight ratio between thickening agent and the vegetable ingredient is in the range of 1:20 to 20:1.

3. A process according to claim 1 wherein the amount of the edible fat is at the most 20 wt%.

4. A process according to claim 3 wherein the amount of the edible fat is at the most 15 wt%, preferably at the most 10 wt%, more preferably at the most 5 wt% and most preferably at the most 3 wt%.

5. A process according to claim 1 wherein the aqueous phase contains the vegetable ingredient dry matter in an amount being in the range of 0.5-10 wt% and preferably in the range of 1-5 wt%.

6. A process according to claim 2 wherein the proportion of native dietary fiber in the vegetable ingredient dry matter is at least 10 wt%.

7. A process according to claim 6 wherein the proportion of native dietary fiber in the vegetable ingredient dry matter is at least 15 wt%.

8. A process according to claim 1 wherein the vegetable ingredient comprises native dietary fiber and native starch in a weight ratio which is in the range of 1:20 to 1:2, preferably in the range of 1:15 to 1:3 and most preferably in the range of 1:10 to 1:4.

9. A process according to claim 1 wherein the vegetable ingredient is a native non-fractionated plant material.

10. A process according to claim 9 wherein the vegetable ingredient is selected from plant tuber materials, plant root materials, cereal grains and dicotyledonous plant seeds.

11. A process according to claim 10 wherein the plant tuber material is potatoes.

12. A process according to claim 10 wherein the plant root material is selected from tapioca roots, cassava roots and arrowroots.

13. A process according to claim 9 wherein the native non-fractionated plant material is pre-cooked.

14. A process according to claim 1 wherein the vegetable ingredient is a mixture of a separated native starch component and a separated native dietary fiber component which is less than 50% water soluble.

15. A process according to claim 1 wherein the vegetable ingredient is obtained by supplementing a native non-fractionated plant material of which the dry matter proportion of native dietary fiber is less than 5 wt% with a sufficient amount of native dietary fiber.

16. A process according to claim 1 wherein the vegetable ingredient is obtained by supplementing a native non-fractionated plant material of which the dry matter proportion of native starch is less than 50 wt% with a sufficient amount of native starch.

17. A process according to claim 15 or 16 wherein the supplemented vegetable ingredient is subjected to a heat treatment.

18. A process according to claim 1 wherein the thickening agent(s) and the vegetable ingredient is added in the form of a texture-improving composition containing a vegetable ingredient comprising native dietary fiber which is less than 50% water soluble, and native starch, in a weight ratio which is in the range of 1:32 to 1:1, the proportion of dietary fiber being at least 5 wt% of the vegetable ingredient dry matter when determined as non-starch polysaccharides (NSP), and the proportion of starch being at least 50 wt% of the vegetable ingredient dry matter, and at least one thickening agent which is more than 90% water soluble, the weight ratio between thickening agents and the vegetable ingredient being in the range of 1:20 to 20:1.

19. A process according to claim 18 wherein the texture-improving composition has a water content being at the most 20 wt%.

20. A process according to claim 2 wherein the weight ratio between thickening agent and the vegetable ingredient in the texture-improving composition is in the range of 1:10 to 10:1.

21. A process according to any of preceding claims wherein the stably emulsified food product is a food product selected from the group consisting of a mayonnaise product, a salad dressing a sauce product and a spreadable product.

22. A process for preparing a texture-improving composition for use in making an emulsified food product, the composition containing a vegetable ingredient comprising native dietary fiber which is less than 50% water soluble, and native starch, in a weight ratio which is in the range of 1:32 to 1:1, the proportion of dietary fiber being at least 5 wt% of the vegetable ingredient dry matter when determined as non-starch polysaccharides (NSP), and the proportion of starch being at least 50 wt% of the vegetable ingredient dry matter, and at least one thickening agent which is more than 90% water soluble, the weight ratio between thickening agents and the vegetable ingredient being in the range of 1:20 to 20:1.

23. A process according to claim 22 wherein the thickening agent is selected from the group consisting of a modified starch, a partially hydrolyzed starch, alginic acid or salts or esters thereof, a water soluble cellulose derivative, a gum of vegetable or microbial origin, a carrageenan and tragacanth.

24. A process according to claim 22 wherein the proportion of native dietary fiber in the vegetable ingredient dry matter is at least 10 wt%.

25. A process according to claim 24 wherein the proportion of native dietary fiber in the vegetable ingredient dry matter is at least 15 wt%.

26. A process according to claim 22 wherein the vegetable ingredient comprises native dietary fiber and native starch in a weight ratio which is in the range of 1:20 to 1:2, preferably in the range of 1:15 to 1:3 and most preferably in the range of 1:10 to 1:4.

27. A process according to claim 22 wherein the vegetable ingredient is a native non-fractionated plant material.

28. A process according to claim 27 wherein the vegetable ingredient is selected from plant tuber materials, plant root materials, cereal grains and dicotyledonous plant seeds.

29. A process according to claim 28 wherein the plant tuber material is potatoes.

30. A process according to claim 28 wherein the plant root material is selected from tapioca roots, cassava roots and arrowroots.

31. A process according to claim 27 wherein the native non-fractionated plant material is pre-cooked.

32. A process according to claim 22 wherein the vegetable ingredient is a mixture of a separated native starch component and a separated native dietary fiber component which is less than 50% water soluble.

33. A process according to claim 22 wherein the vegetable ingredient is obtained by supplementing a native non-fractionated plant material of which the dry matter proportion of native dietary fiber is less than 5 wt% with a sufficient amount of native dietary fiber.

34. A process according to claim 22 wherein the vegetable ingredient is obtained by supplementing a native non-fractionated plant material of which the dry matter proportion of native starch is less than 50 wt% with a sufficient amount of native starch.

35. A process according to any of preceding claims 22-34 wherein the resulting composition has a water content being at the most 20 wt%.

36. A process according to claim 22 wherein the weight ratio between thickening agent and the vegetable ingredient is in the range of 1:10 to 10:1.

**Patentansprüche**

**Patentansprüche für folgende Vertragsstaaten : AT, BE, CH, DE, DK, FR, GB, IT, LI, LU, NL, SE**

1. Stabil emulgiertes Lebensmittelprodukt, enthaltend 1-30 Gew.% einer dispersen Fettphase, mindestens ein Emulgiermittel und eine kontinuierliche wässrige Phase, wobei die wässrige Phase 0,1-20 Gew.% Trockensubstanz eines pflanzlichen Bestandteils enthält, der native eßbare Fasern, die weniger als 50 % wasserlöslich sind, und native Stärke in einem Gewichtsverhältnis im Bereich von 1:32 bis 1:1 umfaßt, wobei der Anteil der eßbaren Fasern mindestens 5 Gew.% der Trockensubstanz des pflanzlichen Bestandteils beträgt, wenn er als Nicht-Stärke-Polysaccharide (NSP) bestimmt wird, und der Anteil der Stärke mindestens 50 Gew.% der Trockensubstanz des pflanzlichen Bestandteils ausmacht, und ein Verdickungsmittel, das mehr als 90 % wasserlöslich ist.

2. Lebensmittelprodukt gemäß Anspruch 1, dadurch **gekennzeichnet**, daß die Menge der dispersen Fettphase höchstens 20 Gew.% beträgt.

3. Lebensmittelprodukt gemäß Anspruch 2, dadurch **gekennzeichnet**, daß die Menge der dispersen Fettphase höchstens 15 Gew.%, vorzugsweise höchstens 10 Gew.%, stärker bevorzugt höchstens 5 Gew.% und besonders bevorzugt höchstens 3 Gew.% beträgt.

4. Lebensmittelprodukt gemäß Anspruch 1, dadurch **gekennzeichnet**, daß die wässrige Phase den pflanzlichen Bestandteil als Trockensubstanz in einer Menge im Bereich von 0,5-10 Gew.% und vorzugsweise im Bereich von 1-5 Gew.% enthält.

5. Lebensmittelprodukt gemäß Anspruch 1, dadurch **gekennzeichnet**, daß der Anteil nativer eßbarer Fasern in der Trockensubstanz des pflanzlichen Bestandteils mindestens 10 Gew.% beträgt.

6. Lebensmittelprodukt gemäß Anspruch 5, dadurch **gekennzeichnet**, daß der Anteil nativer eßbarer Fasern in der Trockensubstanz des pflanzlichen Bestandteils mindestens 15 Gew.% beträgt.

7. Lebensmittelprodukt gemäß Anspruch 1, dadurch **gekennzeichnet,** daß der pflanzliche Bestandteil native eßbare Fasern und native Stärke in einem Gewichtsverhältnis umfaßt, das im Bereich von 1:20 bis 1:2, vorzugsweise im Bereich von 1:15 bis 1:3 und besonders bevorzugt im Bereich von 1:10 bis 1:4 liegt.

8. Lebensmittelprodukt gemäß Anspruch 1, dadurch **gekennzeichnet**, daß der pflanzliche Bestandteil ein nativer, nicht-fraktionierter pflanzlicher Stoff ist.

9. Lebensmittelprodukt gemäß Anspruch 8, dadurch **gekennzeichnet**, daß der pflanzliche Bestandteil ausgewählt ist aus Pflanzenknollenmaterial, Pflanzenwurzelmaterial, Getreide und Pflanzensamen von Dikotyledonpflanzen.

10. Lebensmittelprodukt gemäß Anspruch 9, dadurch **gekennzeichnet**, daß das Pflanzenknollenmaterial Kartoffeln ist.

11. Lebensmittelprodukt gemäß Anspruch 9, dadurch **gekennzeichnet,** daß das Pflanzenwurzelmaterial aus Tapiocawurzeln, Cassavawurzeln und Pfeilwurzeln ausgewählt wird.

12. Lebensmittelprodukt gemäß Anspruch 8, dadurch **gekennzeichnet**, daß das native nicht-fraktionierte pflanzliche Material vorgekocht ist.

13. Lebensmittelprodukt gemäß Anspruch 1, dadurch **gekennzeichnet**, daß der pflanzliche Bestandteil eine Mischung aus einer separaten nativen Stärkekomponente und einer separaten nativen eßbaren Faserkomponente ist, die weniger als 50 % wasserlöslich ist.

14. Lebensmittelprodukt gemäß Anspruch 1, dadurch **gekennzeichnet**, daß der pflanzliche Bestandteil dadurch erhalten wird, daß man ein natives nichtfraktioniertes pflanzliches Material, dessen Trockensubstanzanteil an nativen eßbaren Fasern weniger als 5 Gew.% beträgt, mit einer hinreichenden Menge an nativen eßbaren Fasern ergänzt.

15. Lebensmittelprodukt gemäß Anspruch 1, dadurch **gekennzeichnet**, daß der pflanzliche Bestandteil erhalten wird, indem man ein natives, nicht-fraktioniertes pflanzliches Material, dessen Trockensubstanzanteil an nativer Stärke weniger als 50 Gew.% beträgt, mit einer hinreichenden Menge nativer Stärke ergänzt.

16. Lebensmittelprodukt gemäß Anspruch 14 oder 15, dadurch **gekennzeichnet**, daß der ergänzte pflanzliche Bestandteil einer Hitzebehandlung unterworfen wird.

17. Lebensmittelprodukt gemäß einem der vorhergehenden Ansprüche, das ein aus der aus einem Mayonnaiseprodukt, einem Salat-Dressing, einem Soßenprodukt und einem Aufstrichprodukt bestehenden Gruppe ausgewähltes Lebensmittelprodukt ist.

18. Texturverbessernde Zusammensetzung zur Verwendung bei der Herstellung eines emulgierten Lebensmittelprodukts, enthaltend einen pflanzlichen Bestandteil, der native eßbare Fasern, die weniger als 50 % wasserlöslich sind, und native Stärke in einem Gewichtsverhältnis umfaßt, das im Bereich von 1:32 bis 1:1 liegt, wobei der Anteil der eßbaren Fasern mindestens 5 Gew.% der Trockensubstanz des pflanzlichen Bestandteils beträgt, wenn er als Nicht-Stärke-Polysaccharide (NSP) bestimmt wird, und der Stärkeanteil mindestens 50 Gew.% der Trockensubstanz des pflanzlichen Bestandteils ausmacht, und mindestens ein Verdickungsmittel, das mehr als 90 % wasserlöslich ist, wobei das Gewichtsverhältnis zwischen Verdickungsmitteln und dem pflanzlichen Bestandteil im Bereich von 1:20 bis 20:1 liegt.

19. Zusammensetzung gemäß Anspruch 18, dadurch **gekennzeichnet**, daß das Verdickungsmittel ausgewählt ist aus der Gruppe bestehend aus einer modifizierten Stärke, einer teilweise hydrolysierten Stärke, Algininsäure oder deren Salzen oder Estern, einem wasserlöslichen Cellulosederivat, einem Gummi pflanzlichen oder mikrobiellen Ursprungs, einem Carrageenan und Tragacanth.

20. Zusammensetzung gemäß Anspruch 18, dadurch **gekennzeichnet**, daß der Anteil nativer eßbarer Fasern in der Trockensubstanz des pflanzlichen Bestandteils mindestens 10 Gew.% beträgt.

21. Zusammensetzung gemäß Anspruch 20, dadurch **gekennzeichnet**, daß der Anteil nativer eßbarer Fasern in der Trockensubstanz des pflanzlichen Bestandteils mindestens 15 Gew.% beträgt.

22. Zusammensetzung gemäß Anspruch 18, dadurch **gekennzeichnet**, daß der pflanzliche Bestandteil native eßbare Fasern und native Stärke in einem Gewichtsverhältnis umfaßt, das im Bereich von 1:20 bis 1:2, vorzugsweise im Bereich von 1:15 bis 1:3 und besonders bevorzugt im Bereich von 1:10 bis 1:4 liegt.

23. Zusammnensetzung gemäß Anspruch 18, dadurch **gekennzeichnet**, daß der pflanzliche Bestandteil ein natives nicht-fraktioniertes pflanzliches Material ist.

24. Zusammensetzung gemäß Anspruch 23, dadurch **gekennzeichnet**, daß der pflanzliche Bestandteil ausgewählt ist aus Pflanzenknollenmaterial, Pflanzenwurzelmaterial, Getreide und Pflanzensamen von Dikotyledonpflanzen.

25. Zusammensetzung gemäß Anspruch 24, dadurch **gekennzeichnet**, daß das Pflanzenknollenmaterial Kartoffeln ist.

26. Zusammensetzung gemäß Anspruch 24, dadurch **gekennzeichnet**, daß das Pflanzenwurzelmaterial aus Tapiokawurzeln, Cassavawurzeln und Pfeilwurzeln ausgewählt wird.

27. Zusammensetzung gemäß Anspruch 23, dadurch **gekennzeichnet**, daß das native nicht-fraktionierte Pflanzenmaterial vorgekocht ist.

28. Zusammensetzung gemäß Anspruch 18, dadurch **gekennzeichnet**, daß der pflanzliche Bestandteil eine Mischung aus einer separaten nativen Stärkekomponente und einer separaten nativen eßbaren Faserkomponente ist, die weniger als 50 % wasserlöslich ist.

29. Zusammensetzung gemäß Anspruch 18, dadurch **gekennzeichnet**, daß der pflanzliche Bestandteil dadurch erhalten wird, daß man ein natives nicht-fraktioniertes pflanzliches Material, dessen Trockenanteil an nativen eßbaren Fasern weniger als 5 Gew.% beträgt, mit einer hinreichenden Menge an nativen eßbaren Fasern ergänzt.

**30.** Zusammensetzung gemäß Anspruch 18, dadurch **gekennzeichnet**, daß der pflanzliche Bestandteil dadurch erhalten wird, daß man ein natives, nicht-fraktioniertes pflanzliches Material, dessen Trockenanteil an nativer Stärke weniger als 50 Gew.% beträgt, mit einer hinreichenden Menge nativer Stärke ergänzt.

**31.** Zusammensetzung gemäß einem der vorhergehenden Ansprüche, die einen Wassergehalt von höchstens 20 Gew.% hat.

**32.** Zusammensetzung gemäß Anspruch 18, dadurch **gekennzeichnet**, daß das Gewichtsverhältnis zwischen Verdickungsmittel und pflanzlichem Bestandteil im Bereich von 1:10 bis 10:1 liegt.

**33.** Verfahren zur Herstellung eines stabil emulgierten Lebensmittelprodukts, umfassend die Mischung von 1-30 Gew.% eines eßbaren Fetts, mindestens eines Emulgiermittels und einer wässrigen Phase, enthaltend 0,1-20 Gew.% Trockensubstanz eines pflanzlichen Bestandteils, umfassend native eßbare Fasern, die weniger als 50 % wasserlöslich sind, und native Stärke in einem Gewichtsverhältnis, das im Bereich von 1:32 bis 1:1 liegt, wobei der Anteil der eßbaren Fasern mindestens 5 Gew.% der Trockensubstanz des pflanzlichen Bestandteils beträgt, wenn er als Nicht-Stärke-Polysaccharide (NSP) bestimmt wird, und der Stärkeanteil mindestens 50 Gew.% der Trockensubstanz des pflanzlichen Bestandteils beträgt, und mindestens ein Verdickungsmittel, das mehr als 90 % wasserlöslich ist, wobei das Gewichtsverhältnis zwischen Verdickungsmittel und dem pflanzlichen Bestandteil im Bereich von 1:20 bis 20:1 liegt, so daß eine Öl-in-Wasser-Emulsion erhalten wird.

**34.** Verfahren gemäß Anspruch 33, dadurch **gekennzeichnet**, daß die Menge des eßbaren Fetts höchstens 20 Gew% beträgt.

**35.** Verfahren gemäß Anspruch 34, dadurch **gekennzeichnet**, daß die Menge des eßbaren Fetts höchstens 15 Gew.%, vorzugsweise höchstens 10 Gew.%, stärker bevorzugt höchstens 5 Gew.% und besonders bevorzugt höchstens 3 Gew.% beträgt.

**36.** Verfahren gemäß Anspruch 33, dadurch **gekennzeichnet**, daß die wässrige Phase den pflanzlichen Bestandteil als Trockensubstanz in einer Menge im Bereich von 0,5-10 Gew.% und vorzugsweise im Bereich von 1-5 Gew.% enthält.

**37.** Verfahren gemäß Anspruch 33, dadurch **gekennzeichnet**, daß der Anteil nativer eßbarer Fasern in der Trockensubstanz des pflanzlichen Bestandteils mindestens 10 Gew.% beträgt.

**38.** Verfahren gemäß Anspruch 37, dadurch **gekennzeichnet**, daß der Anteil nativer eßbarer Fasern in der Trockensubstanz des pflanzlichen Bestandteils mindestens 15 Gew.% beträgt.

**39.** Verfahren gemäß Anspruch 33, dadurch **gekennzeichnet**, daß der pflanzliche Bestandteil native eßbare Fasern und native Stärke in einem Gewichtsverhältnis umfaßt, das im Bereich von 1:20 bis 1:2, vorzugsweise im Bereich von 1:15 bis 1:3 und besonders bevorzugt im Bereich von 1:10 bis 1:4 liegt.

**40.** Verfahren gemäß Anspruch 33, dadurch **gekennzeichnet**, daß der pflanzliche Bestandteil ein natives, nicht-fraktioniertes pflanzliches Material ist.

**41.** Verfahren gemäß Anspruch 40, dadurch **gekennzeichnet**, daß der pflanzliche Bestandteil ausgewählt ist aus Pflanzenknollenmaterial, Pflanzenwurzelmaterial, Getreide und Pflanzensamen von Dikotyledonpflanzen.

**42.** Verfahren gemäß Anspruch 41, dadurch **gekennzeichnet**, daß das Pflanzenknollenmaterial Kartoffeln ist.

**43.** Verfahren gemäß Anspruch 41, dadurch **gekennzeichnet**, daß das Pflanzenwurzelmaterial aus Tapiokawurzeln, Cassavawurzeln und Pfeilwurzeln ausgewählt wird.

**44.** Verfahren gemäß Anspruch 40, dadurch **gekennzeichnet**, daß das native, nicht-fraktionierte pflanzliche Material vorgekocht ist.

**45.** Verfahren gemäß Anspruch 33, dadurch **gekennzeichnet**, daß der pflanzliche Bestandteil eine Mischung aus einer separaten nativen Stärkekomponente und einer separaten nativen eßbaren Faserkomponente

EP 0 526 564 B1

ist, die weniger als 50 % wasserlöslich ist.

46. Verfahren gemäß Anspruch 33, dadurch **gekennzeichnet**, daß der pflanzliche Bestandteil dadurch erhalten wird, daß man ein natives, nicht-fraktioniertes pflanzliches Material, dessen Trockensubstanzanteil von nativen eßbaren Fasern weniger als 5 Gew.% beträgt, mit einer hinreichenden Menge an nativen eßbaren Fasern ergänzt.

47. Verfahren gemäß Anspruch 33, dadurch **gekennzeichnet**, daß der pflanzliche Bestandteil erhalten wird, indem man ein natives nicht-fraktioniertes pflanzliches Material, dessen Trockensubstanzanteil an nativer Stärke weniger als 50 Gew.% beträgt, mit einer hinreichenden Menge nativer Stärke ergänzt.

48. Verfahren gemäß Anspruch 33, dadurch **gekennzeichnet**, daß das/die Verdickungsmittel und der pflanzliche Bestandteil in Form einer texturverbessernden Zusammensetzung gemäß Anspruch 18 zugegeben wird.

49. Verfahren gemäß Anspruch 48, dadurch **gekennzeichnet**, daß die texturverbessernde Zusammensetzung einen Wassergehalt von höchstens 20 Gew.% hat.

50. Verfahren gemäß Anspruch 33, dadurch **gekennzeichnet**, daß das Gewichtsverhältnis zwischen Verdickungsmittel(n) und dem pflanzlichen Bestandteil in der texturverbessernden Zusammensetzung im Bereich von 1:10 bis 10:1 liegt.

**Patentansprüche für folgende Vertragsstaaten : GR, ES**

1. Verfahren zur Herstellung eines stabil emulgierten Lebensmittelprodukts, umfassend die Mischung von 1-30 Gew.% eines eßbaren Fetts, mindestens eines Emulgiermittels und einer wässrigen Phase, die 0,1-20 Gew.% Trockensubstanz eines pflanzlichen Bestandteils, umfassend native eßbare Fasern, die weniger als 50 % wasserlöslich sind, und native Stärke in einem Gewichtsverhältnis enthält, das im Bereich von 1:32 bis 1:1 liegt, wobei der Anteil der eßbaren Fasern mindestens 5 Gew.% der Trockensubstanz des pflanzlichen Bestandteils ausmacht, wenn er als Nicht-Stärke-Polysaccharide (NSP) bestimmt wird, und der Anteil der Stärke mindestens 50 Gew.% der Trockensubstanz des pflanzlichen Bestandteils ausmacht, und mindestens ein Verdickungsmittel enthält, das mehr als 90 % wasserlöslich ist, so daß eine Öl-in-Wasser-Emulsion erhalten wird.

2. Verfahren gemäß Anspruch 1, dadurch **gekennzeichnet**, daß das Gewichtsverhältis zwischen Verdickungsmittel und pflanzlichem Bestandteil im Bereich von 1:20 bis 20:1 liegt.

3. Verfahren gemäß Anspruch 1, dadurch **gekennzeichnet**, daß die Menge des eßbaren Fetts höchstens 20 Gew.% beträgt.

4. Verfahren gemäß Anspruch 3, dadurch **gekennzeichnet**, daß die Menge des eßbaren Fetts höchstens 15 Gew.%, vorzugsweise höchstens 10 Gew.%, stärker bevorzugt höchstens 5 Gew.% und besonders bevorzugt höchstens 3 Gew.% beträgt.

5. Verfahren gemäß Anspruch 1, dadurch **gekennzeichnet**, daß die wässrige Phase den pflanzlichen Bestandteil als Trockensubstanz in einer Menge im Bereich von 0,5-10 Gew.% und vorzugsweise im Bereich von 1-5 Gew.% enthält.

6. Verfahren gemäß Anspruch 2, dadurch **gekennzeichnet**, daß der Anteil von nativen eßbaren Fasern an der Trockensubstanz des pflanzlichen Bestandteils mindestens 10 Gew.% beträgt.

7. Verfahren gemäß Anspruch 6, dadurch **gekennzeichnet**, daß der Anteil von nativen eßbaren Fasern an der Trockensubstanz des pflanzlichen Bestandteils mindestens 15 Gew.% beträgt.

8. Verfahren gemäß Anspruch 1, dadurch **gekennzeichnet**, daß der pflanzliche Bestandteil native eßbare Fasern und native Stärke in einem Gewichtsverhältnis umfaßt, das im Bereich von 1:20 bis 1:2, vorzugsweise im Bereich von 1:15 bis 1:3 und besonders bevorzugt im Bereich von 1:10 bis 1:4 liegt.

9. Verfahren gemäß Anspruch 1, dadurch **gekennzeichnet**, daß der pflanzliche Bestandteil ein natives, nicht-fraktioniertes pflanzliches Material ist.

**34**

10. Verfahren gemäß Anspruch 9, dadurch **gekennzeichnet**, daß der pflanzliche Bestandteil aus Pflanzenknollenmaterial, Pflanzenwurzelmaterial, Getreide und Pflanzensamen von Dikotyledonpflanzen ausgewählt ist.

11. Verfahren gemäß Anspruch 10, dadurch **gekennzeichnet**, daß das Pflanzenknollenmaterial Kartoffeln ist.

12. Verfahren gemäß Anspruch 10, dadurch **gekennzeichnet**, daß das Pflanzenwurzelmaterial aus Tapiokawurzeln, Cassavawurzeln und Pfeilwurzeln ausgewählt wird.

13. Verfahren gemäß Anspruch 9, dadurch **gekennzeichnet**, daß das native, nicht-fraktionierte pflanzliche Material vorgekocht ist.

14. Verfahren gemäß Anspruch 1, dadurch **gekennzeichnet**, daß der pflanzliche Bestandteil eine Mischung aus einer separaten nativen Stärkekomponente und einer separaten nativen eßbaren Faserkomponente ist, die weniger als 50 % wasserlöslich ist.

15. Verfahren gemäß Anspruch 1, dadurch **gekennzeichnet**, daß der pflanzliche Bestandteil dadurch erhalten wird, daß man ein natives, nicht-fraktioniertes pflanzliches Material, dessen Trockensubstanzanteil an nativen eßbaren Fasern weniger als 5 Gew.% beträgt, mit einer hinreichenden Menge an nativen eßbaren Fasern ergänzt.

16. Verfahren gemäß Anspruch 1, dadurch **gekennzeichnet**, daß der pflanzliche Bestandteil erhalten wird, indem man ein natives, nicht-fraktioniertes pflanzliches Material, dessen Trockensubstanzanteil an nativer Stärke weniger als 50 Gew.% beträgt, mit einer hinreichenden Menge nativer Stärke ergänzt.

17. Verfahren gemäß Anspruch 15 oder 16, dadurch **gekennzeichnet**, daß der ergänzte pflanzliche Bestandteil einer Hitzebehandlung unterworfen wird.

18. Verfahren gemäß Anspruch 1, dadurch **gekennzeichnet**, daß das/die Verdickungsmittel und der pflanzliche Bestandteil in Form einer texturverbessernden Zusammensetzung zugegeben werden, welche einen pflanzlichen Bestandteil, umfassend native eßbare Fasern, die weniger als 50 % wasserlöslich sind, und native Stärke in einem Gewichtsverhältnis enthält, das im Bereich von 1:32 bis 1:1 liegt, wobei der Anteil der eßbaren Fasern mindestens 5 Gew.% der Trockensubstanz des pflanzlichen Bestandteils beträgt, wenn er als Nicht-Stärke-Polysaccharide (NSP) bestimmt wird, und der Stärkeanteil mindestens 50 Gew.% der Trockensubstanz des pflanzlichen Bestandteils beträgt, und mindestens ein Verdickungsmittel, das mehr als 90 % wasserlöslich ist, wobei das Gewichtsverhältnis zwischen den Verdickungsmitteln und dem pflanzlichen Bestandteil im Bereich von 1:20 bis 20:1 liegt.

19. Verfahren gemäß Anspruch 18, dadurch **gekennzeichnet**, daß die texturverbessernde Zusammensetzung einen Wassergehalt von höchstens 20 Gew.% hat.

20. Verfahren gemäß Anspruch 2, dadurch **gekennzeichnet**, daß das Gewichtsverhältnis zwischen Verdickungsmittel und dem pflanzlichen Bestandteil in der texturverbessernden Zusammensetzung im Bereich von 1:10 bis 10:1 liegt.

21. Verfahren gemäß einem der vorhergehenden Ansprüche, dadurch **gekennzeichnet**, daß das stabil emulgierte Lebensmittelprodukt ein aus der aus einem Mayonnaiseprodukt, einem Salat-Dressing, einem Soßenprodukt und einem Aufstrichprodukt bestehenden Gruppe ausgewähltes Lebensmittelprodukt ist.

22. Verfahren zur Herstellung einer texturverbessernden Zusammensetzung zur Verwendung bei der Herstellung eines emulgierten Lebensmittelprodukts, enthaltend einen pflanzlichen Bestandteil, der native eßbare Fasern, die weniger als 50 % wasserlöslich sind, und native Stärke in einem Gewichtsverhältnis umfaßt, das im Bereich von 1:32 bis 1:1 liegt, wobei der Anteil der eßbaren Fasern mindestens 5 Gew.% der Trockensubstanz des pflanzlichen Bestandteils beträgt, wenn er als Nicht-Stärke-Polysaccharide (NSP) bestimmt wird, und der Stärkeanteil mindestens 50 Gew.% der Trockensubstanz des pflanzlichen Bestandteils ausmacht, und mindestens ein Verdickungsmittel, das mehr als 90 % wasserlöslich ist, wobei das Gewichtsverhältnis zwischen Verdickungsmitteln und dem pflanzlichen Bestandteil im Bereich von 1:20 bis 20:1 liegt.

**23.** Verfahren gemäß Anspruch 22, dadurch **gekennzeichnet**, daß das Verdickungsmittel ausgewählt ist aus der Gruppe, bestehend aus einer modifizierten Stärke, einer teilweise hydrolysierten Stärke, Algininsäure oder deren Salzen oder Estern, einem wasserlöslichen Cellulosederivat, einem Gummi pflanzlichen oder mikrobiellen Ursprungs, einem Carrageenan und Tragacanth.

**24.** Verfahren gemäß Anspruch 22, dadurch **gekennzeichnet**, daß der Anteil nativer eßbarer Fasern in der Trockensubstanz des pflanzlichen Bestandteils mindestens 10 Gew.% beträgt.

**25.** Verfahren gemäß Anspruch 24, dadurch **gekennzeichnet**, daß der Anteil nativer eßbarer Fasern in der Trockensubstanz des pflanzlichen Bestandteils mindestens 15 Gew.% beträgt.

**26.** Verfahren gemäß Anspruch 22, dadurch **gekennzeichnet**, daß der pflanzliche Bestandteil native eßbare Fasern und native Stärke in einem Gewichtsverhältnis umfaßt, das im Bereich von 1:20 bis 1:2, vorzugsweise im Bereich von 1:15 bis 1:3 und besonders bevorzugt im Bereich von 1:10 bis 1:4 liegt.

**27.** Verfahren gemäß Anspruch 22, dadurch **gekennzeichnet**, daß der pflanzliche Bestandteil ein natives, nichtfraktioniertes pflanzliches Material ist.

**28.** Verfahren gemäß Anspruch 27, dadurch **gekennzeichnet**, daß der pflanzliche Bestandteil aus Pflanzenknollenmaterial, Pflanzenwurzelmaterial, Getreide und Pflanzensamen von Dikotyledonpflanzen ausgewählt ist.

**29.** Verfahren gemäß Anspruch 28, dadurch **gekennzeichnet**, daß das Pflanzenknollenmaterial Kartoffeln ist.

**30.** Verfahren gemäß Anspruch 28, dadurch **gekennzeichnet**, daß das Pflanzenwurzelmaterial aus Tapiokawurzeln, Cassavawurzeln und Pfeilwurzeln ausgewählt wird.

**31.** Verfahren gemäß Anspruch 27, dadurch **gekennzeichnet**, daß das native, nicht-fraktionierte Pflanzenmaterial vorgekocht ist.

**32.** Verfahren gemäß Anspruch 22, dadurch **gekennzeichnet**, daß der pflanzliche Bestandteil eine Mischung aus einer separaten nativen Stärkekomponente und einer separaten nativen eßbaren Faserkomponente ist, die weniger als 50 % wasserlöslich ist.

**33.** Verfahren gemäß Anspruch 22, dadurch **gekennzeichnet**, daß der pflanzliche Bestandteil dadurch erhalten wird, daß man ein natives, nicht-fraktioniertes pflanzliches Material, dessen Trockenanteil an nativen eßbaren Fasern weniger als 5 Gew.% beträgt, mit einer hinreichenden Menge an nativen eßbaren Fasern ergänzt.

**34.** Verfahren gemäß Anspruch 22, dadurch **gekennzeichnet**, daß der pflanzliche Bestandteil dadurch erhalten wird, daß man ein natives, nicht-fraktioniertes pflanzliches Material, dessen Trockenanteil an nativer Stärke weniger als 50 Gew.% beträgt, mit einer hinreichenden Menge nativer Stärke ergänzt.

**35.** Verfahren gemäß einem der vorhergehenden Ansprüche 22-34, dadurch **gekennzeichnet**, daß die erhaltene Zusammensetzung einen Wassergehalt von höchstens 20 Gew.% hat.

**36.** Verfahren gemäß Anspruch 22, dadurch **gekennzeichnet**, daß das Gewichtsverhältnis zwischen Verdickungsmittel und pflanzlichem Bestandteil im Bereich von 1:10 bis 10:1 liegt.

## Revendications

**Revendications pour les Etats contractants suivants : AT, BE, CH, DE, DK, FR, GB, IT, LI, LU, NL, SE**

**1.** Produit alimentaire transformé en émulsion stable, contenant 1-30% en poids d'une phase grasse dispersée, au moins un agent émulsifiant et une phase aqueuse continue, la phase aqueuse contenant 0,1-20% en poids de matière sèche d'un constituant végétal comprenant une fibre alimentaire native qui est soluble à moins de 50% dans l'eau, et de l'amidon natif, dans un rapport en poids qui se situe dans l'intervalle de 1:32 à 1:1, la proportion de fibre alimentaire étant d'au moins 5% en poids de la matière sèche du constituant végétal lorsqu'elle est déterminée sous la forme de polysaccharides non-amidon (PNA), et la proportion d'amidon étant d'au moins 50% en poids de la matière sèche du constituant végétal, et un agent épaississant qui est soluble à plus de 90% dans l'eau.

2. Produit alimentaire selon la revendication 1, dans lequel la quantité de phase grasse dispersée est au plus de 20% en poids.

3. Produit alimentaire selon la revendication 2, dans lequel la quantité de phase grasse dispersée est d'au plus 15% en poids, de préférence d'au plus 10% en poids, plus avantageusement encore d'au plus 5% en poids et le plus avantageusement d'au plus 3% en poids.

4. Produit alimentaire selon la revendication 1, dans lequel la phase aqueuse contient la matière sèche du constituant végétal en une quantité se situant dans l'intervalle de 0,5-10% en poids et de préférence dans l'intervalle de 1-5% en poids.

5. Produit alimentaire selon la revendication 1, dans lequel la proportion de fibre alimentaire native dans la matière sèche du constituant végétal est d'au moins 10% en poids.

6. Produit alimentaire selon la revendication 5, dans lequel la proportion de fibre alimentaire native dans la matière sèche du constituant végétal est d'au moins 15% en poids.

7. Produit alimentaire selon la revendication 1, dans lequel le constituant végétal comprend une fibre alimentaire native et de l'amidon natif dans un rapport en poids qui se situe dans l'intervalle de 1:20 à 1:2, de préférence dans l'intervalle de 1:15 à 1:3 et plus avantageusement dans l'intervalle de 1:10 à 1:4.

8. Produit alimentaire selon la revendication 1, dans lequel le constituant végétal est un matériau végétal natif non-fractionné.

9. Produit alimentaire selon la revendication 8, dans lequel le constituant végétal est choisi parmi les matériaux des tubercules de plantes, les matériaux des racines de plantes, les grains de céréales et les graines de plantes dicotylédones.

10. Produit alimentaire selon la revendication 9, dans lequel le matériau de tubercules de plantes est des pommes de terre.

11. Produit alimentaire selon la revendication 9, dans lequel le matériau de racines de plantes est choisi parmi des racines de tapioca, des racines de cassave et de l'arrow-root.

12. Produit alimentaire selon la revendication 8, dans lequel le matériau végétal natif non-fractionné est précuit.

13. Produit alimentaire selon la revendication 1, dans lequel le constituant végétal est un mélange d'un composant d'amidon natif séparé et d'un composant de fibre alimentaire native séparée qui est soluble à moins de 50% dans l'eau.

14. Produit alimentaire selon la revendication 1, dans lequel le constituant végétal est obtenu par addition à un matériau végétal natif non-fractionné, dont la proportion de matière sèche de fibre alimentaire native est inférieure à 5% en poids, d'une quantité suffisante de fibre alimentaire native.

15. Produit alimentaire selon la revendication 1, dans lequel le constituant végétal est obtenu par addition à un matériau végétal non-fractionné natif, dont la proportion de matière sèche d'amidon natif est inférieure à 50% en poids, d'une quantité suffisante d'amidon natif.

16. Produit alimentaire selon la revendication 14, dans lequel le constituant végétal complété est soumis à un traitement thermique.

17. Produit alimentaire selon l'une quelconque des revendications précédentes, qui est un produit alimentaire choisi dans le groupe composé d'un produit de type mayonnaise, d'un assaisonnement pour salades, d'un produit de type sauce et d'un produit étalable.

18. Composition d'amélioration de la texture pour utilisation dans la production d'un produit alimentaire émulsifié, la composition contenant un constituant végétal comprenant une fibre alimentaire native, qui est soluble à moins de 50% dans l'eau, un amidon natif, dans un rapport en poids qui se situe dans l'intervalle de 1:32 à 1:1, la proportion de fibre alimentaire étant d'au moins 5% en poids de la matière sèche du constituant végétal lorsqu'elle est déterminée sous la forme de polysaccharides non-amidon (PNA), et la proportion d'amidon étant d'au moins 50% en poids de la matière sèche du constituant végétal, et au moins un agent épaississant qui est soluble à plus de 90% dans l'eau, le rapport en poids entre les agents épaississants et le constituant végétal se situant dans l'intervalle de 1:20 à 20:1.

19. Composition selon la revendication 18, dans laquelle l'agent épaississant est choisi dans le groupe composé d'un amidon modifié, d'un amidon partiellement hydrolysé, d'acide alginique ou de sels ou esters de celui-ci, d'un dérivé de cellulose hydrosoluble, d'une gomme d'origine végétale ou microbienne, d'une carraghenine et d'adragante.

20. Composition selon la revendication 18, dans laquelle la proportion de fibre alimentaire native dans la matière sèche du constituant végétal est d'au moins 10% en poids.

21. Composition selon la revendication 20, dans laquelle la proportion de fibre alimentaire native dans la matière sèche du constituant végétal est d'au moins 15% en poids.

22. Composition selon la revendication 18, dans laquelle le constituant végétal comprend des fibres alimentaires natives et de l'amidon natif dans un rapport en poids qui se situe dans l'intervalle de 1:20 à 1:2, de préférence dans l'intervalle de 1:15 à 1:3 et plus avantageusement encore dans l'intervalle de 1:10 à 1:4.

23. Composition selon la revendication 18, dans laquelle le constituant végétal est un matériau végétal non-fractionné.

24. Composition selon la revendication 23, dans laquelle le constituant végétal est choisi parmi les matériaux des tubercules de plantes, les matériaux des racines de plantes, les grains de céréales et les graines de plantes dicotylédones.

25. Composition selon la revendication 24, dans laquelle le matériau de tubercules de plantes est des pommes de terre.

26. Composition selon la revendication 24, dans laquelle le matériau de racines de plantes est choisi parmi des racines de tapioca, des racines de cassave et de l'arrow-root.

27. Composition selon la revendication 23, dans laquelle le matériau végétal natif non-fractionné est pré-cuit.

28. Composition selon la revendication 18, dans laquelle le constituant végétal est un mélange d'un composant d'amidon natif séparé et d'un composant de fibre alimentaire native séparée qui est soluble à moins de 50% dans l'eau.

29. Composition selon la revendication 18, dans laquelle le constituant végétal est obtenu par addition à un matériau végétal natif non-fractionné, dont la proportion de matière sèche de fibre alimentaire native est inférieure à 5% en poids, d'une quantité suffisante de fibre alimentaire native.

30. Composition selon la revendication 18, dans laquelle le constituant végétal est obtenu par addition à un matériau végétal non-fractionné natif, dont la proportion de matière sèche d'amidon natif est inférieure à 50% en poids, d'une quantité suffisante d'amidon natif.

31. Composition selon l'une quelconque des revendications précédentes, qui a une teneur en eau d'au plus 20% en poids.

32. Composition selon la revendication 18, dans laquelle le rapport en poids entre l'agent épaississant et le constituant végétal se situe dans l'intervalle de 1:10 à 10:1.

33. Procédé pour la production d'un produit alimentaire transformé en émulsion stable, comprenant le mélange de 1-30% en poids d'une graisse comestible, au moins un agent émulsifiant et une phase aqueuse contenant 0,1-20% en poids de matière sèche d'un constituant végétal comprenant une fibre alimentaire native qui est soluble à moins de 50% dans l'eau, et de l'amidon natif, dans un rapport en poids qui se situe dans l'intervalle de 1:32 à 1:1, la proportion de fibre alimentaire étant d'au moins 5% en poids de la matière sèche du constituant végétal lorsqu'elle est déterminée sous la forme de polysaccharides non-amidon (PNA), et la proportion d'amidon étant d'au moins 50% en poids de la matière sèche du constituant végétal, et au moins un agent épaississant qui est soluble à plus de 90% dans l'eau, le rapport en poids entre l'agent épaississant et le constituant végétal se situant dans l'intervalle de 1:20 à 20:1, pour obtenir une émulsion d'huile-dans-l'eau.

34. Procédé selon la revendication 33, dans lequel la quantité de graisse comestible est d'au plus 20% en poids.

35. Procédé selon la revendication 34, dans lequel la quantité de graisse comestible est d'au plus 15% en poids, de préférence d'au plus 10% en poids, plus avantageusement encore d'au plus 5% en poids et le plus avantageusement d'au plus 3% en poids.

36. Procédé selon la revendication 33, dans lequel la phase aqueuse contient la matière sèche du constituant végétal en une quantité se situant dans l'intervalle de 0,5-10% en poids et de préférence dans l'intervalle de 1-5% en poids.

37. Procédé selon la revendication 33, dans lequel la proportion de fibre alimentaire native dans la matière sèche du constituant végétal est d'au moins 10% en poids.

38. Procédé selon la revendication 37, dans lequel la proportion de fibre alimentaire native dans la matière sèche du constituant végétal est d'au moins 15% en poids.

39. Procédé selon la revendication 33, dans lequel le constituant végétal comprend une fibre alimentaire native et de l'amidon natif dans un rapport en poids qui se situe dans l'intervalle de 1:20 à 1:2, de préférence dans l'intervalle de 1:15 à 1:3 et plus avantageusement dans l'intervalle de 1:10 à 1:4.

40. Procédé selon la revendication 33, dans lequel le constituant végétal est un matériau végétal natif non-fractionné.

41. Procédé selon la revendication 40, dans lequel le constituant végétal est choisi parmi les matériaux des tubercules de plantes, les matériaux des racines de plantes, les grains de céréales et les graines de plantes dicotylédones.

42. Procédé selon la revendication 41, dans lequel le matériau de tubercules de plantes est des pommes de terre.

43. Procédé selon la revendication 41, dans lequel le matériau de racines de plantes est choisi parmi des racines de tapioca, des racines de cassave et de l'arrow-root.

44. Procédé selon la revendication 40, dans lequel le matériau végétal natif non-fractionné est pré-cuit.

45. Procédé selon la revendication 33, dans lequel le constituant végétal est un mélange d'un composant d'amidon natif séparé et d'un composant de fibre alimentaire native séparée qui est soluble à moins de 50% dans l'eau.

46. Procédé selon la revendication 33, dans lequel le constituant végétal est obtenu par addition à un matériau végétal natif non-fractionné, dont la proportion de matière sèche de fibre alimentaire native est inférieure à 5% en poids, d'une quantité suffisante de fibre alimentaire native.

47. Procédé selon la revendication 33, dans lequel le constituant végétal est obtenu par addition à un matériau végétal non-fractionné natif, dont la proportion de matière- sèche d'amidon natif est inférieure à 50% en poids, d'une quantité suffisante d'amidon natif.

48. Procédé selon la revendication 33, dans lequel l'(les) agent(s) épaississant(s) et le constituant végétal est(sont) ajouté(s) sous la forme d'une composition d'amélioration de la texture selon la revendication 18.

**49.** Procédé selon la revendication 48, dans lequel la composition d'amélioration de la texture a une teneur en eau d'au plus 20% en poids.

**50.** Procédé selon la revendication 33, dans lequel le rapport en poids entre l'(les) agent(s) épaississant(s) et le constituant végétal dans la composition d'amélioration de la texture se situe dans l'intervalle de 1:10 à 10:1.

**Revendications pour les Etats contractants suivants: GR, ES**

**1.** Procédé pour la production d'un produit alimentaire transformé en émulsion stable, comprenant le mélange de 1-30% en poids d'une graisse comestible, au moins un agent émulsifiant et une phase aqueuse contenant 0,1-20% en poids de matière sèche d'un constituant végétal comprenant une fibre alimentaire native qui est soluble à moins de 50% dans l'eau, et de l'amidon natif, dans un rapport en poids qui se situe dans l'intervalle de 1:32 à 1:1, la proportion de fibre alimentaire étant d'au moins 5% en poids de la matière sèche du constituant végétal lorsqu'elle est déterminée sous la forme de polysaccharides non-amidon (PNA), et la proportion d'amidon étant d'au moins 50% en poids de la matière sèche du constituant végétal, et au moins un agent épaississant qui est soluble à plus de 90% dans l'eau, pour obtenir une émulsion d'huile-dans-l'eau.

**2.** Procédé selon la revendication 1, dans lequel le rapport en poids entre l'agent épaississant et le constituant végétal se situe dans l'intervalle de 1:20 à 20:1.

**3.** Procédé selon la revendication 1, dans lequel la quantité de graisse comestible est d'au plus 20% en poids.

**4.** Procédé selon la revendication 3, dans lequel la quantité de graisse comestible est d'au plus 15% en poids, de préférence d'au plus 10% en poids, plus avantageusement encore d'au plus 5% en poids et le plus avantageusement d'au plus 3% en poids.

**5.** Procédé selon la revendication 1, dans lequel la phase aqueuse contient la matière sèche du constituant végétal en une quantité se situant dans l'intervalle de 0,5-10% en poids et de préférence dans l'intervalle de 1-5% en poids.

**6.** Procédé selon la revendication 2, dans lequel la proportion de fibre alimentaire native dans la matière sèche du constituant végétal est d'au moins 10% en poids.

**7.** Procédé selon la revendication 6, dans lequel la proportion de fibre alimentaire native dans la matière sèche du constituant végétal est d'au moins 15% en poids.

**8.** Procédé selon la revendication 1, dans lequel le constituant végétal comprend une fibre alimentaire native et de l'amidon natif dans un rapport en poids qui se situe dans l'intervalle de 1:20 à 1:2, de préférence dans l'intervalle de 1:15 à 1:3 et plus avantageusement dans l'intervalle de 1:10 à 1:4.

**9.** Procédé selon la revendication 1, dans lequel le constituant végétal est un matériau végétal natif non-fractionné.

**10.** Procédé selon la revendication 9, dans lequel le constituant végétal est choisi parmi les matériaux des tubercules de plantes, les matériaux des racines de plantes, les grains de céréales et les graines de plantes dicotylédones.

**11.** Procédé selon la revendication 10, dans lequel le matériau de tubercules de plantes est des pommes de terre.

**12.** Procédé selon la revendication 10, dans lequel le matériau de racines de plantes est choisi parmi des racines de tapioca, des racines de cassave et de l'arrow-root.

**13.** Procédé selon la revendication 9, dans lequel le matériau végétal natif non-fractionné est pré-cuit.

**14.** Procédé selon la revendication 1, dans lequel le constituant végétal est un mélange d'un composant d'amidon natif séparé et d'un composant de fibre alimentaire native séparée qui est soluble à moins de 50% dans l'eau.

15. Procédé selon la revendication 1, dans lequel le constituant végétal est obtenu par addition à un matériau végétal natif non-fractionné, dont la proportion de matière sèche de fibre alimentaire native est inférieure à 5% en poids, d'une quantité suffisante de fibre alimentaire native.

16. Procédé selon la revendication 1, dans lequel le constituant végétal est obtenu par addition à un matériau végétal non-fractionné natif, dont la proportion de matière sèche d'amidon natif est inférieure à 50% en poids, d'une quantité suffisante d'amidon natif.

17. Procédé selon l'une des revendications 15 ou 16, dans lequel le constituant végétal complété est soumis à un traitement thermique.

18. Procédé selon la revendication 1, dans lequel l'(les) agent(s) épaississant(s) et le constituant végétal sont ajoutés sous la forme d'une composition d'amélioration de la texture contenant un constituant végétal comprenant une fibre alimentaire native, qui est soluble à moins de 50% dans l'eau, et de l'amidon natif, dans un rapport en poids qui se situe dans l'intervalle de 1:32 à 1:1, la proportion de fibre alimentaire étant d'au moins 5% en poids de la matière sèche du constituant végétal lorsqu'elle est déterminée sous la forme de polysaccharides non-amidon (PNA), et la proportion d'amidon étant d'au moins 50% en poids de la matière sèche du constituant végétal, et au moins un agent épaississant qui est soluble à plus de 90% dans l'eau, le rapport en poids entre les agents épaississants et le constituant végétal se situant dans l'intervalle de 1:20 à 20:1.

19. Procédé selon la revendication 18, dans lequel la composition d'amélioration de la texture a une teneur en eau d'au plus 20% en poids.

20. Procédé selon la revendication 2, dans lequel le rapport en poids entre l'agent épaississant et le constituant végétal dans la composition d'amélioration de la texture se situe dans l'intervalle de 1:10 à 10:1.

21. Procédé selon l'une quelconque des revendications précédentes, dans lequel le produit alimentaire transformé en émulsion stable est un produit alimentaire choisi dans le groupe composé d'un produit de type mayonnaise, d'un assaisonnement pour salades, d'un produit de type sauce et d'un produit étalable.

22. Procédé pour la préparation d'une composition d'amélioration de la texture pour utilisation dans la production d'un produit alimentaire émulsifié, la composition contenant un constituant végétal comprenant une fibre alimentaire native, qui est soluble à moins de 50% dans l'eau, un amidon natif, dans un rapport en poids qui se situe dans l'intervalle de 1:32 à 1:1, la proportion de fibre alimentaire étant d'au moins 5% en poids de la matière sèche du constituant végétal lorsqu'elle est déterminée sous la forme de polysaccharides non-amidon (PNA), et la proportion d'amidon étant d'au moins 50% en poids de la matière sèche du constituant végétal, et au moins un agent épaississant qui est soluble à plus de 90% dans l'eau, le rapport en poids entre les agents épaississants et le constituant végétal se situant dans l'intervalle de 1:20 à 20:1.

23. Procédé selon la revendication 22, dans lequel l'agent épaississant est choisi dans le groupe composé d'un amidon modifié, d'un amidon partiellement hydrolysé, d'acide alginique ou de sels ou esters de celui-ci, d'un dérivé de cellulose hydrosoluble, d'une gomme d'origine végétale ou microbienne, d'une carraghenine et d'adragante.

24. Procédé selon la revendication 22, dans lequel la proportion de fibre alimentaire native dans la matière sèche du constituant végétal est d'au moins 10% en poids.

25. Procédé selon la revendication 24, dans lequel la proportion de fibre alimentaire native dans la matière sèche du constituant végétal est d'au moins 15% en poids.

26. Procédé selon la revendication 22, dans laquelle le constituant végétal comprend des fibres alimentaires natives et de l'amidon natif dans un rapport en poids qui se situe dans l'intervalle de 1:20 à 1:2, de préférence dans l'intervalle de 1:15 à 1:3 et plus avantageusement encore dans l'intervalle de 1:10 à 1:4.

27. Procédé selon la revendication 22, dans lequel le constituant végétal est un matériau végétal non-fractionné.

28. Procédé selon la revendication 27, dans lequel le constituant végétal est choisi parmi les matériaux des tubercules de plantes, les matériaux des racines de plantes, les grains de céréales et les graines de plantes dicotylédones.

29. Procédé selon la revendication 28, dans lequel le matériau de tubercules de plantes est des pommes de terre.

30. Procédé selon la revendication 28, dans lequel le matériau de racines de plantes est choisi parmi des racines de tapioca, des racines de cassave et de l'arrow-root.

31. Procédé selon la revendication 27, dans lequel le matériau végétal natif non-fractionné est pré-cuit.

32. Procédé selon la revendication 22, dans lequel le constituant végétal est un mélange d'un composant d'amidon natif séparé et d'un composant de fibre alimentaire native séparée qui est soluble à moins de 50% dans l'eau.

33. Procédé selon la revendication 22, dans lequel le constituant végétal est obtenu par addition à un matériau végétal natif non-fractionné, dont la proportion de matière sèche de fibre alimentaire native est inférieure à 5% en poids, d'une quantité suffisante de fibre alimentaire native.

34. Procédé selon la revendication 22, dans lequel le constituant végétal est obtenu par addition à un matériau végétal non-fractionné natif, dont la proportion de matière sèche d'amidon natif est inférieure à 50% en poids, d'une quantité suffisante d'amidon natif.

35. Procédé selon l'une quelconque des revendications précédentes 22-34, dans lequel la composition résultante a une teneur en eau d'au plus 20% en poids.

36. Procédé selon la revendication 22, dans lequel le rapport en poids entre l'agent épaississant et le constituant végétal se situe dans l'intervalle de 1:10 à 10:1.